(19) Europäisches Patentamt
European Patent Office
Office européen des brevets

(11) **EP 4 601 229 A1**

(12) **EUROPEAN PATENT APPLICATION**
published in accordance with Art. 153(4) EPC

(43) Date of publication:
**13.08.2025 Bulletin 2025/33**

(21) Application number: **23849320.9**

(22) Date of filing: **31.07.2023**

(51) International Patent Classification (IPC):
***H04L 5/00*** (2006.01)

(52) Cooperative Patent Classification (CPC):
**H04L 5/00; H04W 72/0453; H04W 72/12; H04W 72/1263**

(86) International application number:
**PCT/CN2023/110084**

(87) International publication number:
**WO 2024/027612 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.08.2022 CN 202210921102**

(71) Applicant: **Apogee Networks, LLC**
**Dallas, TX 75201 (US)**

(72) Inventors:
• **YU, Qiaoling**
 **Shanghai 201206 (CN)**
• **ZHANG, Xiaobo**
 **Shanghai 201206 (CN)**

(74) Representative: **Laqua, Bernd Christian Kurt**
**Wuesthoff & Wuesthoff**
**Patentanwälte und Rechtsanwalt PartG mbB**
**Schweigerstraße 2**
**81541 München (DE)**

(54) **METHOD AND APPARATUS USED IN COMMUNICATION NODE FOR WIRELESS COMMUNICATION**

(57) The present application discloses a method and apparatus used in a communication node for wireless communication. The communication node receives a first DCI, and the first DCI comprising a first domain; wireless reception is performed on the first physical layer channel and wireless transmission is performed on the second physical layer channel; the first domain of the first DCI is used to determine the frequency domain resource occupied by the first physical layer channel and the frequency domain resource occupied by the second physical layer channel The present application proposes a new resource allocation scheme for full-duplex operation, with time or frequency domain resources that are used for uplink transmission and downlink transmission through a DCI domain scheduling, and the proposed scheme improves the flexibility and resource utilization of resource scheduling.

FIG. 1

## Description

## Technical Field

The present application relates to transmission methods and apparatuses in wireless communication systems, in particular, to full duplex

## Background Art

Time Division Duplexing (TDD) is widely used for commercial New Radio (NR) deployment, and the time domain resources of TDD are divided into Downlink (DL) and Uplink (UL). In TDD, allocating a limited time interval for the Uplink (UL) will lead to reduced coverage, increased latency, and decreased capacity. To address this issue, 3rd Generation Partnership Project (3GPP) decided at the RAN#94 meeting to initiate the "Study on Evolution of NR Duplex Operation" Study Item (SI). This study focuses on enhancing uplink coverage, reducing latency, increasing system capacity, and improving the configuration flexibility of NR TDD operation in unpaired spectrum, and investigates the feasibility of simultaneous downlink and uplink, i.e., full duplex More specifically, it studies subband non-overlapping full duplex (SBFD) in traditional TDD frequency bands at the gNB terminal.

## Summary of Invention

In the prior art, the base station dynamically schedules the Physical Downlink Shared Channel (PDSCH) and Physical Uplink Shared Channel (PUSCH) for the User Equipment (UE) through different Downlink Control Information (DCI) formats. For full-duplex operation, especially subband non-overlapping full duplex, if the downlink and uplink are highly asymmetric, the existing scheduling mechanism can only schedule a smaller frequency band through the Frequency Domain Resource Assignment (FDRA) domain in the DCI domain, which is insufficient to meet communication requirements. Enhancements are needed to improve scheduling performance.

The present application provides a full-duplex solution to the aboveproblems. To illustrate the above-described issue, the NR systemis used as an example; and the present application is also applicable to scenarios such as LTE systems; furthermore, although the present application provides a specific implementation for unicast, it can also be used in scenarios such as multicast Multicast/Broadcast Service (MBS) to achieve similar technical effects as MT-SDT in the RRC idle state. Furthermore, although the original intent of the present application is focused on the Uu New Radio, it can also be applied to the PC5 interface. Furthermore, although the original intent of the present application is focused on the terminal-to-base station scenario, it is also applicable to Vehicle-to-Everything (V2X) scenarios, communication between terminals and relays, as well as between relays and base stations, achieving similar technical effects as those in the terminal-to-base station scenario. Furthermore, although the original intent of the present application is focused on the terminal-to-base station scenario, it is also applicable to communication scenarios involving Integrated Access and Backhaul (IAB), achieving similar technical effects as those in the terminal-to-base station scenario. Furthermore, although the original intent of the present application is focused on Terrestrial Network (TN) scenarios, it is also applicable to communication scenarios involving Non-Terrestrial Network (NTN), achieving similar technical effects as those in the TN scenario. In addition, using an unified solution across different scenarios helps reduce hardware complexity and costs.

As an embodiment, the interpretation of terminology in the present application is the definition of a specification protocol TS36 series, referring to 3GPP.

As an embodiment, the interpretation of terminology in the present application is the definition of a specification protocol TS38 series, referring to 3GPP.

As an embodiment, the interpretation of terminology in the present application is the definition of a specification protocol TS37 series, referring to 3GPP.

As an embodiment, the interpretation of terminology in the present application refers to the definitions in the specifications protocol of Institute of Electrical and Electronics Engineers (IEEE).

It is to be noted that, in the absence of conflict, the embodiments of any of the nodes ofthe present application and the features of the embodiments may be applied to any of the other nodes. In the absence of conflicts, the embodiments of the present application and the features in the embodiments may be combined with each other arbitrarily.

The present application discloses a method used in a first node for wireless communication, comprising:

receiving a first DCI, where the first DCI includes the first domain;
performing wireless reception on a first physicallayer channel and wireless transmission on a second physical layer channel;
wherein the first domain of the first DCI is used to determine the frequency domain resource occupied by the first physicallayer channel and the frequency domain resource occupied by the second physical layer channel.

According to one aspect of the present application, wherein the first DCI comprises a second domain, the second domain of the first DCI is used to determine the time domain resource occupied by the first physicallayer channel and the time domain resource occupied by the second physicallayer channel.

The present application discloses a method used in a first node for wireless communication, comprising:

receiving a first DCI, where the first DCI includes the second domain;
performing wireless reception on a first physicallayer channel and wireless transmission on a second physical layer channel;
wherein the second domain of the first DCI is used to determine the time domain resource occupied by the first physicallayer channel and the time domain resource occupied by the second physicallayer channel.

According to one aspect of the present application, wherein the first DCI comprises a first domain, the first domain of the first DCI is used to determine the frequency domain resource occupied by the first physical layer channel and the frequency domain resource occupied by the second physical layer channel.

As an embodiment, issues to be addressed by the present application include: How to improve scheduling flexibility.

As an embodiment, issues to be addressed by the present application include: How to improve scheduling efficiency.

As an embodiment, issues to be addressed by the present application include: How to avoid waste ofresources.

As an embodiment, issues to be addressed by the present application include: How to schedule PDSCH and PUSCH simultaneously.

As an embodiment, issues to be addressed by the present application include: Howto reduce scheduling latency.

As an embodiment, the characteristics of the above methods include: the first domain of the first DCI is used to determine the frequency domain res ource occupied by the first physicallayer channel an d the frequency domain resource occupied by the second physical layer channel.

As an embodiment, the characteristics of the above methods include: perform wireless reception on the first physical layer channel and wireless transmission on the second physicallayer channel according to the frequency domain resources indicated by the first domain of the first DCI.

As an embodiment, the characteristics of the above methods include: the second domain of the first DCI is used to determine the time domain resource occupied by the first physical layer channel and the time domain resource occupied by the second physical layer channel.

As an embodiment, the characteristics of the above methods include: perform wireless reception on the first physicallayer channel and wireless transmission on the second physical layer channel according to the time domain resources indicated by the second domain of the first DCI.

As an embodiment, the advantages ofthe above described methods include: Increase scheduling flexibility.

As an embodiment, the advantages ofthe above described methods include: Improve scheduling efficiency.

As an embodiment, the advantages ofthe above described methods include: Avoid waste of resources.

As an embodiment, the advantages of the above described methods include: Simultaneously schedule uplink transmission and downlink transmission.

As an embodiment, the advantages ofthe above described methods include: Reduce scheduling latency.

According to one aspect ofthe present application, wherein the first DCI includes a first candidate domain and a second candidate domain; the first candidate domain indicates at least one of the Modulation and Coding Scheme (MCS), New Data Indicator (NDI), Redundancy Version (RV), or Hybrid Automatic Repeat Request (HARQ) Process Number for the first physical layer channel; the second candidate domain indicates at least one ofthe MCS, NDI, RV, or HARQ Process Number for the second physical layer channel.

As an embodiment, the characteristics ofthe above methods include: The first DCI indicates at least one of the MCS, NDI, RV, or HARQ Process Number for the first physical layer channel, and the first DCI also indicates at least one of the MCS, NDI, RV, or HARQ Process Number for the second physical layer channel.

As an embodiment, the characteristics of the above methods include: Independently configure the HARQ processes forPDSCH and PUSCH.

As an embodiment, the advantages of the above described methods include: Uplink and downlink transmissions can be independently configured, increasing system scheduling flexibility.

According to one aspect of the present application, wherein it comprises:

receiving a first message, and the first message was used to determine a load size of the first domain of the first DCI.

According to one aspect of the present application, wherein the first message is used to determine a first frequency domain resource pool; at least one of the frequency domain resources occupied by the first physical layer channel or the frequency domain resources occupied by the second physical layer channel belongs to the first frequency domain resource pool.

As an embodiment, the frequency domain resources occupied by the first physicallayer channel belong to the first frequency domain resource pool.

As an embodiment, the frequency domain resources occupied by the second physical layer channel belong to the first frequency domain resource pool.

As an embodiment, the frequency domain resources occupied by the first physical layer channel and the frequency domain resources occupied by the second physical layer channel both belong to the first frequency domain resource pool.

As an embodiment, the characteristics of the above methods include: Configure both the first physical layer channel and the second physicallayer channel simultaneously within the first frequency domain resource pool.

As an embodiment, the advantages of the above described methods include: Reduce scheduling complexity.

As an embodiment, the advantages of the above described methods include: Improve the flexibility of duplex communication.

As an embodiment, the advantages ofthe above described methods include: Improve resource utilization.

According to one aspect of the present application, wherein it comprises:

receive a second message, the second message being used to determine the second frequency domain resource pool;
wherein the frequency domain resource occupied by the first physical layer channel belongs to the first frequency domain resource pool; the frequency domain resource occupied by the second physical layer channel belongs to the second frequency domain resource pool.

As an embodiment, the characteristics ofthe above methods include: Configure the first physical layer channel and the second physical layer channel respectively in the first frequency domain resource pool and the second frequency domain resource pool.

As an embodiment, the advantages ofthe above described methods include: Improve the flexibility of resource configuration.

According to one aspect of the present application, wherein the first message is used to determine a first frequency domain resource subset, and the first frequency domain resource subset belongs to the first frequency domain resource pool; the frequency domain resource occupied by the first physical layer channel belongs to the first frequency domain resource pool, and the frequency domain resource occupied by the second physical layer channel belongs to the first frequency domain res ource subset; or, the frequency domain resource occupied by the first physical layer channel belongs to the first frequency domain resource subset, and the frequency domain resource occupied by the second physical layer channel belongs to the first frequency domain resource pool.

The present application discloses a method used in a second node for wireless communication, comprising:

receiving a first DCI, where the first DCI comprises the first domain;
performing wireless transmission on a first physical layer channel and wireless reception on a second physical layer channel;
wherein the first domain of the first DCI is used to determine the frequency domain resource occupied by the first physicallayer channel and the frequency domain resource occupied by the second physical layer channel.

According to one aspect of the present application, wherein the first DCI comprises a second domain, the second domain of the first DCI is used to determine the time domain resource occupied by the first physicallayer channel and the time domain resource occupied by the second physical layer channel.

The present application discloses a method used in a second node for wireless communication, comprising:

sending a first DCI, where the first DCI comprises the second domain;
performing wireless transmission on a first physical layer channel and wireless reception on a second physical layer channel;
wherein the second domain of the first DCI is used to determine the time domain resource occupied by the first physicallayer channel and the time domain resource occupied by the second physical layer channel.

According to one aspect of the present application, wherein the first DCI comprises a first domain, the first domain of the first DCI is used to determine the frequency domain resource occupied by the first physical layer channel and the frequency domain resource occupied by the second physical layer channel.

According to one aspect of the present application, wherein the first DCI comprises a first candidate domain and a second candidate domain; the first candidate domain indicates at least one of an MCS, NDI, RV or HARQ Process Number for the first physicallayer channel; the second candidate domain indicates at least one of an MCS, NDI, RV or HARQ Process Number for the second physicallayer channel.

According to one aspect of the present application, wherein it comprises:
Sending a first message, where the first message is used to determine the load size of the first domain of the first DCI.

According to one aspect of the present application, wherein the first message is used to determine a first frequency domain resource pool; at least one of the frequency domain resources occupied by the first physical layer channel or the frequency domain resources occupied by the second physical layer channel belongs to the first frequency domain resource pool.

According to one aspect of the present application, wherein it comprises:

Sending a second message, where the second message is used to determine the second frequency domain resource pool;

wherein the frequency domain resource occupied by the first physical layer channel belongs to the first frequency domain resource pool; the frequency domain resource occupied by the second physical layer channel belongs to the second frequency domain resource pool.

According to one aspect of the present application, wherein the first message is used to determine a first frequency domain resource subset, and the first frequency domain resource subset belongs to the first frequency domain resource pool; the frequency domain resource occupied by the first physical layer channel belongs to the first frequency domain resource pool, and the frequency domain resource occupied by the second physical layer channel belongs to the first frequency domain resource subset; or, the frequency domain resource occupied by the first physical layer channel belongs to the first frequency domain resource subset, and the frequency domain resource occupied by the second physicallayerchannel belongs to the first frequency domain resource pool.

The present application discloses a first node for wireless communication, wherein it comprises:

a first receiver receiving a first DCI, the first DCI comprising a first domain;
a first processor performing wireless reception on a first physicallayer channel and wireless transmission on a second physical layer channel;
wherein the first domain of the first DCI is used to determine the frequency domain resource occupied by the first physicallayer channel and the frequency domain resource occupied by the second physical layer channel.

The present application discloses a first node for wireless communication, wherein it comprises:

a first receiver receiving a first DCI, the first DCI comprising a second domain;
a first processor performing wireless reception on a first physicallayer channel and wireless transmission on a second physical layer channel;
wherein the second domain of the first DCI is used to determine the time domain resource occupied by the first physical layer channel and the time domain resource occupied by the second physical layer channel.

The present application discloses a second node for wireless communication, wherein it comprises:

a second transmitter, sending a first DCI, where the first DCI comprises the first domain;
a second processor performing wireless transmission on a first physical layer channel and wireless reception on a second physical layer channel;
wherein the first domain of the first DCI is used to determine the frequency domain resource occupied by the first physicallayer channel and the frequency domain resource occupied by the second physical layer channel.

The present application discloses a second node for wireless communication, wherein it comprises:

a second transmitter, sending a first DCI, where the first DCI comprises the second domain;
a second processor performing wireless transmission on a first physical layer channel and wireless reception on a second physical layer channel;
wherein the second domain of the first DCI is used to determine the time domain resource occupied by the first physicallayer channel and the time domain resource occupied by the second physical layer channel.

As an embodiment, the present application has the following advantages over conventional schemes:

- . Simultaneously schedule uplink transmission and downlink transmission;
- Reduce the signaling overhead of DCI;
- Improve scheduling flexibility;
- Improve scheduling efficiency;
- Avoid resource waste;
- Reduce scheduling latency;
- Reduce scheduling complexity;
- Improve resource utilization;
- Improve the flexibility of resource configuration.

**Description of Accompanying Drawings**

Other features, objects, and advantages of the present application will become more apparent by reading the detailed description of the non-limiting embodiments with reference to the following drawings:

FIG. 1 illustrates a flow diagram ofthe transmission of a first DCI according to one embodiment of the present application;
FIG. 2 illustrates a schematic diagram of a network architecture according to one embodiment of the present application;
FIG. 3 illustrates a schematic diagram of an embodiment of a wireless protocol architecture for an user plane and a control plane according to one embodiment of the present application;
FIG. 4 illustrates a schematic diagram of a first communications device and a second communications device according to one embodiment of the present application;
FIG. 5 illustrates a flow diagram of wireless signal transmission according to one embodiment of the present application;

FIG. 6 illustrates a flow diagram of wireless signal transmission according to another embodiment of the present application;

FIG. 7 illustrates a schematic diagram of a first DCI including a second domain according to one embodiment of the present application;

FIG. 8 illustrates a schematic diagram of a first frequency domain resource pool according to one embodiment of the present application;

FIG. 9 illustrates a schematic diagram of a first and second frequency domain resource pools according to one embodiment of the present application;

FIG. 10 illustrates a schematic diagram of a frequency domain res ource occupied by a first and second physical layer channel according to one embodiment of the present application;

FIG. 11 illustrates a schematic diagram of the frequency domain resources occupied by the first and second physical layer channels according to another embodiment of the present application;

FIG. 12 illustrates a schematic diagram of time domain resources occupied by the first and second physical layer channels according to one embodiment of the present application;

FIG. 13 illustrates a schematic diagram of time domain resources occupied by the first and second physical layer channels according to another embodiment of the present application;

FIG. 14 illustrates a schematic diagram of time and frequency domain resources occupied by the first and second physical layer channels according to one embodiment of the present application;

FIG. 15 illustrates a schematic diagram of a first DCI comprising a first candidate domain and a second candidate domain according to one embodiment of the present application;

FIG. 16 illustrates a structural block diagram of a processing apparatus for use in a first node according to one embodiment of the present application;

FIG. 17 illustrates a structural block diagram of a processing apparatus for use in a second node according to one embodiment of the present application.

## Specific Implementation Method

The technical solution of the present application will be described in further detail below in conjunction with the accompanying drawings, and it is to be noted that, in the absence of conflicts, the embodiments of the present application and the features in the embodiments may be combined with each other arbitrarily.

## Embodiment 1

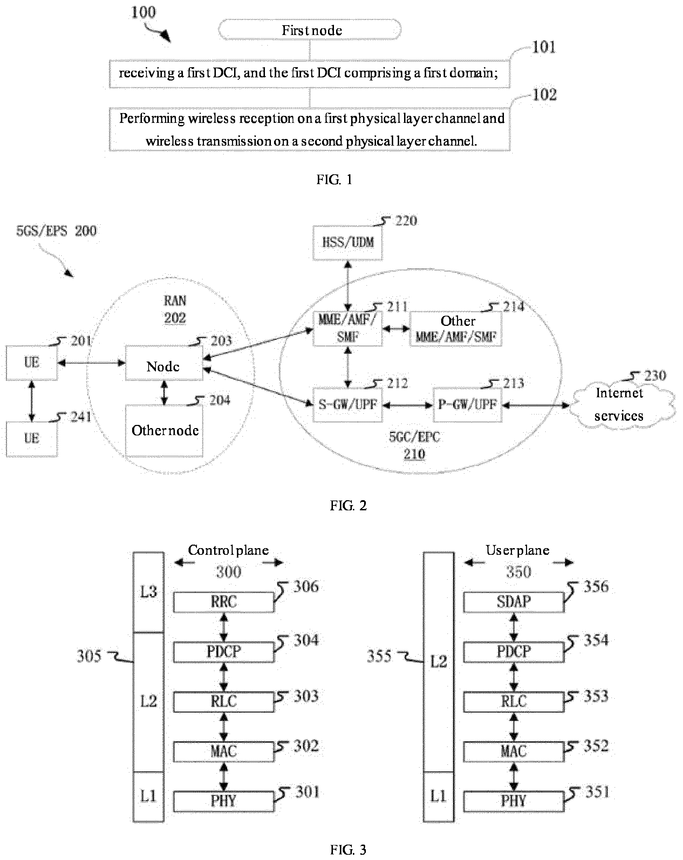

Embodiment 1 exemplifies a flow diagram of transmission of the first DCI according to one embodiment of the present application, as shown in FIG. 1. In FIG. 1, each box represents a step, with particular emphasis on the order of the various boxes in the FIG not representing the temporal relation between the indicated steps.

In Embodiment 1, the first node in the present application, in step 101, receives the first DCI, where the first DCI includes the first domain; in step 102, wireless reception is performed on the first physicallayer channel and wireless transmission is performed on the second physical layer channel; where the first domain of the first DCI is used to determine the frequency domain resources occupied by the first physical layer channel and the frequency domain resources occupied by the second physical layer channel.

As an embodiment, the sender of the first DCI is an user equipment.

As an embodiment, the sender of the first DCI is a base station device.

As an embodiment, the sender of the first DCI is a Transmission Receiving Point (TRP).

As an embodiment, the sender of the first DCI is a maintenance base station of a first cell.

As an embodiment, the first DCI is received on a first cell.

As an embodiment, the first cell is a Serving Cell of the first node.

As an embodiment, the first cell is a Special Cell (SpCell) of the first node.

As an embodiment, the first cell is a Primary Cell (PCell) of the first node.

As an embodiment, the first cell is a Primary Secondary Cell Group (SCG) Cell (PSCell) of the first node.

As an embodiment, the first cell is an activated Secondary Cell (SCell) of the first node.

As an embodiment, the first cell is a schedule cell.

As an embodiment, the first node listens for Physical Downlink Control Channel (PDCCH) on the first cell.

As an embodiment, the first DCI is transmitted on PDCCH.

As an embodiment, the first DCI is transmitted over a physical layer channel.

As an embodiment, the first DCI is a physicallayer signaling.

As an embodiment, the first DCI is a Layer 1 (L1) signaling.

As an embodiment, the first DCI is a control signaling.

As an embodiment, the first DCI is a DCI.

As an embodiment, the first DCI is received on a Common Search Space (CSS).

As an embodiment, the first DCI is received on an UE-Specific Search Space (USS).

As an embodiment, the first DCI is received on a CSS Set.

As an embodiment, the first DCI is received on an USS Set.

As an embodiment, the format of the first DCI is Format 0_0.

As an embodiment, the format of the first DCI is Format 1_0.

As an embodiment, the format of the first DCI is Format 2_0.

As an embodiment, the format of the first DCI is not one of Format 0_0 or Format 1_0 or Format 2_0.

As an embodiment, the format of the first DCI is dedicated to full duplex.

As an embodiment, the first domain of the first DCI is a Frequency Domain Resource Assignment (FDRA) domain.

As an embodiment, the first domain of the first DCI is a Frequency domain resource assignment domain.

As an embodiment, the load size of the first domain of the first DCI is equal to positive integer bits.

As an embodiment, the load size of the first domain of the first DCI is variable.

As an embodiment, the load size of the first domain of the first DCI is fixed.

As an embodiment, the load size of the first domain of the first DCI refers to the number of bits occupied by the first domain of the first DCI.

As an embodiment, the load size of the first domain of the first DCI is related to a first Bandwidth Part (BWP).

As an embodiment, the load of the first domain of the first DCI occupies positive integer bits.

As an embodiment, the positive integer bits occupied by the load of the first domain of the first DCI are continuous.

As an embodiment, no bit other than the first domain is present between any two bits of the positive integer bit occupied by the load of the first domain of the first DCI.

As an embodiment, the first domain of the first DCI is used for frequency domain resource allocation.

As a sub-embodiment of the present embodiment, the first domain of the first DCI is used to determine a frequency domain resource.

As a sub-embodiment of the present embodiment, the distribution of the frequency domain resources includes the location of the frequency domain resources.

As a sub-embodiment of the present embodiment, the distribution of the frequency domain resources includes the size of the frequency domain resources.

As a sub-embodiment of the present embodiment, the frequency domain resource allocation includes the number of frequency domain resource blocks and an index of the frequency domain resource blocks.

As a sub-embodiment of the present embodiment, the distribution of the frequency domain resources includes the location of the frequency domain resources and the size of the frequency domain resources.

As an embodiment, the frequency domain resource indicated by the first domain of the first DCI includes a continuous frequency resources.

As an embodiment, the frequency domain resource indicated by the first domain of the first DCI includes a non-continuous frequency resource.

As an embodiment, the frequency domain resource distribution type of the frequency domain resource indicated by the first domain of the first DCI is resource allocation type 0.

As an embodiment, the frequency domain resource distribution type of the frequency domain resource indicated by the first domain of the first DCI is resource allocation type 1.

As an embodiment, the frequency domain resources indicated by the first domain of the first DCI include K0 frequency domain resource blocks; the frequency domain resources occupied by the first physical layer channel include K1 frequency domain resource blocks; the frequency domain resources occupied by the second physical layer channel include K2 frequency domain resource blocks; the K0, the K1 and the K2 are positive integers; the sum of K1 and the K2 are not greater than the K0.

As a sub-embodiment of the present embodiment, the sum of the K1 and K2 is less than the K0.

As a sub-embodiment of the present embodiment, the sum of the K1 and K2 is equal to the K0.

As an embodiment, the frequency domain resources indicated by the first domain of the first DCI include K0 frequency domain resource block group; the frequency domain resources occupied by the first physical layer channel include K1 frequency domain resource block group; the frequency domain resources occupied by the second physical layer channel include K2 frequency domain resource block group; the K0, the K1 and the K2 are positive integers; the K1 and the sum of K2 are not greater than the K0.

As a sub-embodiment of the present embodiment, the sum of the K1 and K2 is less than the K0.

As a sub-embodiment of the present embodiment, the sum of the K1 and K2 is equal to the K0.

As an embodiment, the frequency domain resource block in the present application refers to a Physical Resource Block (PRB).

As an embodiment, the frequency domain resource block in the present application refers to a Common Resource Block (CRB).

As an embodiment, the frequency domain resource block in the present application refers to a Virtual Resource Block (VRB).

As an embodiment, the frequency domain resource block group in the present application includes a positive integer frequency domain resource block.

As an embodiment, the frequency domain resource block group in the present application is a Resource Block Group (RBG).

As an embodiment, the frequency domain resource block group in the present application is a Precoding Resource Block Group (PRG).

As an embodiment, the frequency domain resource indicated by the first domain of the first DCI is determined according to section 5.1.2.2 of 3GPP TS38.214.

As an embodiment, wireless reception is performed on the first physical layer channel according to the first DCI.

As an embodiment, wireless reception is performed on the first physical layer channel according to scheduling information of the first DCI.

As an embodiment, wireless reception is performed on the first physical layer channel according to at least the first domain of the first DCI.

As an embodiment, wireless transmission is performed on the second physical layer channel according to the first DCI.

As an embodiment, wireless transmission is performed on the second physical layer channel according to scheduling information of the first DCI.

As an embodiment, wireless transmission is performed on the second physical layer channel according to at least the first domain of the first DCI.

As an embodiment, the "perform wireless reception" includes: performing reception for wireless signals.

As an embodiment, the "perform wireless reception" includes: receiving at least one wireless signal.

As an embodiment, the "perform wireless reception" includes: receiving at least one downlink wireless signal.

As an embodiment, the "perform wireless reception" includes: receiving at least one Sidelink (SL) wireless signal.

As an embodiment, the "perform wireless reception" includes: receiving at least one radio wireless signal.

As an embodiment, the "perform wireless reception" includes: detecting at least one wireless signal.

As an embodiment, the "perform wireless reception" includes: detecting at least one downlink wireless signal.

As an embodiment, the "perform wireless reception" includes: detecting at least one radio wireless signal.

As an embodiment, the "perform wireless reception" includes: decoding at least one wireless signal.

As an embodiment, the "perform wireless reception" includes: decoding at least one downlink wireless signal.

As an embodiment, the "perform wireless reception" includes: decoding at least one radio wireless signal.

As an embodiment, the "perform wireless transmission" includes: performing a transmission for the wireless signal.

As an embodiment, the "perform wireless transmission" includes: sending at least one wireless signal.

As an embodiment, the "perform wireless transmission" includes: sending at least one uplink wireless signal.

As an embodiment, the "perform wireless transmission" includes: sending at least one sidelink wireless signal.

As an embodiment, the "perform wireless transmission" includes: sending at least one radio wireless signal.

As an embodiment, at least one uplink wireless signal includes PUSCH.

As an embodiment, at least one uplink wireless signal includes a Sounding reference signal (SRS).

As an embodiment, at least one uplink wireless signal includes a Demodulation (DM)-RS.

As an embodiment, at least one uplink wireless signal includes a Phase-tracking (PT)-RS.

As an embodiment, at least one downlink wireless signal includes a PDSCH.

As an embodiment, at least one downlink wireless signal includes a Channel-state information (CSI)-RS.

As an embodiment, at least one downlink wireless signal includes a DM-RS.

As an embodiment, at least one downlink wireless signal includes a PT-RS.

As an embodiment, at least one downlink wireless signal includes Positioning (P)-RS.

As an embodiment, at least one downlink wireless signal includes a Primary synchronization signal (PSS).

As an embodiment, at least one downlink wireless signal includes a Secondary synchronization signal (SSS).

As an embodiment, at least one sidelink wireless signal includes a PSSCH.

As an embodiment, at least one sidelink wireless signal includes a PSCCH.

As an embodiment, at least one sidelink wireless signal includes a DM-RS.

As an embodiment, at least one sidelink wireless signal includes a CSI-RS.

As an embodiment, at least one sidelink wireless signal includes a PT-RS.

As an embodiment, at least one sidelink wireless signal includes an S(Sidelink)-PSS.

As an embodiment, at least one sidelink wireless signal includes an S-SSS.

As an embodiment, the first physical layer channel belongs to the first cell and the second physical layer channel belongs to the first cell.

As a sub-embodiment of the present embodiment, the first DCI is only used to schedule the first cell.

As a sub-embodiment of the present embodiment, the sender of the first DCI is a maintenance base station of the first cell.

As a sub-embodiment of the present embodiment, the sender of the first DCI is not a maintenance base station of the first cell.

As an embodiment, the first physical layer channel belongs to the first cell and the second physical layer channel belongs to the second cell.

As a sub-embodiment of the present embodiment, the first DCI is used to schedule at least the first and second cells.

As a sub-embodiment of the present embodiment, the first DCI is only used to schedule the first and second cells.

As a sub-embodiment of the present embodiment, the sender of the first DCI is a maintenance base station of the first cell.

As a sub-embodiment of the present embodiment, the sender of the first DCI is a maintenance base station of the second cell.

As a sub-embodiment of the present embodiment, the sender of the first DCI is not a maintenance base station of the first cell, and the sender of the first DCI is not a maintenance base station of the second cell.

As a sub-embodiment of the present embodiment, the first and second cells belong to the same cell group.

As a sub-embodiment of the present embodiment, the PCI of the first and second cells are different.

As a sub-embodiment of the present embodiment, the serving cell identification for the first and second cells are different.

As a sub-embodiment of the present embodiment, the first and second cells are all serving cells of the first node.

As a sub-embodiment of the present embodiment, both the first and second cells provide wireless resources for the first node.

As a sub-embodiment of the present embodiment, the second cell is configured for the first cell.

As an embodiment, the first physical layer channel is a physical layer channel.

As an embodiment, the first physical layer channel is a PDSCH.

As an embodiment, the first physical layer channel is a PDCCH.

As an embodiment, the first physical layer channel is a Physical Sidelink Shared Channel (PSSCH).

As an embodiment, the first physical layer channel is a Physical Sidelink Control Channel (PSCCH).

As an embodiment, the first physical layer channel is used for downlink transmission.

As an embodiment, the first physical layer channel is used for sidelink transmission.

As an embodiment, the second physical layer channel is a physical layer channel.

As an embodiment, the second physical layer channel is a PUSCH.

As an embodiment, the second physical layer channel is a Physical Uplink Control Channel (PUCCH).

As an embodiment, the second physical layer channel is a Physical Random Access Channel (PRACH).

As an embodiment, the second physical layer channel is a PSSCH.

As an embodiment, the second physical layer channel is a PSCCH.

As an embodiment, the second physical layer channel is used for uplink transmission.

As an embodiment, the second physical layer channel is used for sidelink transmission.

As an embodiment, the first and second physical layer channels are different.

As an embodiment, the first physical layer channel is PDSCH and the second physical layer channel is at least one of PUSCH or PUCCH or PRACH or PSSCH.

As an embodiment, the first physical layer channel is at least one of PDSCH, PDCCH or PSSCH, and the second physical layer channel is PUSCH.

As an embodiment, the first physical layer channel is PDSCH and the second physical layer channel is PUSCH.

As an embodiment, the first physical layer channel is PDSCH and the second physical layer channel is PUCCH.

As an embodiment, the first physical layer channel is PDSCH and the second physical layer channel is PSSCH.

As an embodiment, the first physical layer channel is PSSCH and the second physical layer channel is PUSCH.

As an embodiment, the first physical layer channel includes a time frequency resource for receiving a CSI-RS.

As an embodiment, the second physical layer channel includes a time frequency resource for sending an SRS.

As an embodiment, the first node determines the frequency domain resource occupied by the first physical layer channel and the frequency domain resource occupied by the second physical layer channel according to the first domain of the first DCI.

As an embodiment, the first domain of the first DCI indicates a frequency domain resource distribution for the first physical layer channel and a frequency domain resource distribution for the second physical layer channel.

As an embodiment, the first domain of the first DCI is used to determine the frequency domain resource occupied by the first physical layer channel, and the first domain of the first DCI is used to determine the frequency domain resource occupied by the second physical layer channel.

As an embodiment, at least the first domain of the first DCI is used to determine the frequency domain resource occupied by the first physical layer channel and the frequency domain resource occupied by the second physical layer channel.

As an embodiment, the frequency domain resource indicated by the first domain of the first DCI is used for the first and second physical layer channels.

As an embodiment, the frequency domain resources occupied by the first physical layer channel include all frequency domain resources indicated by the first domain of the first DCI, and the frequency domain resources occupied by the second physicallayer channel include all frequency domain resources indicated by the first domain of the first DCI.

As an embodiment, the frequency domain resources occupied by the first physical layer channel include all of the frequency domain resources indicated by the first domain of the first DCI, and the frequency domain resources occupied by the second physical layer channel include some of the frequency domain resources indicated by the first domain of the first DCI.

As an embodiment, the frequency domain resources occupied by the first physical layer channel include some ofthe frequency domain res ources indicated by the first domain ofthe first DCI, and the frequency domain resources occupied by the second physical layer channel include all of the frequency domain resources indicated by the first domain of the first DCI.

As an embodiment, the frequency domain resources occupied by the first physical layer channel include some ofthe frequency domain res ources indicated by the first domain ofthe first DCI, and the frequency domain resources occupied by the second physicallayer channel include part of the frequency domain resources indicated by the first domain of the first DCI.

As an embodiment, the entire frequency domain resource indicated by the first domain ofthe first DCI is used to determine the first and second physical layer channels.

As an embodiment, a portion of the frequency domain resource indicated by the first domain of the first DCI is used to determine the first and second physical layer channels.

As an embodiment, at least part of the frequency domain resources indicated by the first domain of the first DCI are not used for the first and second physical layer channels.

As an embodiment, at least part of the frequency domain resources indicated by the first domain of the first DCI are used for Rate matching.

As an embodiment, at least part of the frequency domain resources indicated by the first domain of the first DCI are punctured.

As an embodiment, the first DCI includes two domains whose names are the same.

As an embodiment, the first DCI comprises two domains that function the same, one of the two domains being directed to the first physicallayer channel, and the other of the two domains being directed to the second physical layer channel.

As an embodiment, at least the first DCI is received on the USS for determining that the first domain of the first DCI is used to determine the frequency domain resource occupied by the first physicallayer channel and the frequency domain resource occupied by the second physical layer channel.

As an embodiment, the frequency domain location includes a center frequency.

As an embodiment, the frequency domain location is used to determine a center frequency.

As an embodiment, the first DCI includes two FDRA domains, the first domain being one of the two FDRA domains; the first DCI includes only one TDRA domain, and the second domain in the present application is one TDRA domain.

As an embodiment, the first DCI includes only one FDRA domain, the first domain being the one FDRA domain; the first DCI includes two TDRA domains, and the second domain in the present application bein g one of the two TDRA domains.

As an embodiment, the first DCI includes only one FDRA domain, the first domain being the one FDRA domain; the first DCI includes only one TDRA domain, and the second domain in the present application is one TDRA domain.

As an embodiment, the first DCI includes two FDRA domains, the first domain being one of the two FDRA domains; the other of the two FDRA domains are reserved.

As an embodiment, the first DCI includes two TDRA domains, the second domain being one of the two TDRA domains; the other FDRA domain of the two TDRAs domains is reserved.

## Embodiment 2

Embodiment 2 illustrates a schematic diagram of a network architecture according to one embodiment of the present application, as shown in FIG. 2. FIG. 2 illustrates a network architecture 200 of a New Radio (5G NR)/Long-Term Evolution (LTE)/Long-Term Evolution Advanced (LTE-A) system. The 5G NR/LTE/LTE-A network architecture 200 may be referred to as 5G System (5GS)/Evolved Packet System (EPS) 200 or some other suitable term. 5GS/EPS 200 includes at least one of the User Equipment (UE) 201, Radio Access Network (RAN) 202, 5G Core Network (5GC)/Evolved Packet Core (EPC) 210, Home Subscriber Server (HSS)/Unified Data Management (UDM) 220 and Internet Services 230. 5GS/EPS may be interconnected with other access networks, but these entities/interfaces are not shown for simplicity. As shown, 5GS/EPS provides packet exchange services. However, it will be readily understood by those skilled in the art that various concepts presented throughout the present application can be extended to a network or other cellular network providing circuit switching services. The RAN includes nodes 203 and other nodes 204. The node 203 provides for termination of the user and control plane protocol toward UE201. The nodes 203 may be connected to other nodes 204 via an Xn interface (e.g., backhaul)/X2 interface. The node 203 may also be referred to as a base station, a base transceiver station, a radio base station, a radio transceiver, a transceiver function, a Base Service Set (BSS), an Extension Service Set (ESS), a Transmit Receiving Node (TRP), or some other suitable term. The node 203 provides access points to the 5GC/EPC210 for UE201. Examples of UE201 include cellular phone, smart phone, Session Initiation Protocol (SIP) phone, laptop computer, Personal Digital Assistant (PDA), satellite radio, non-ground base station communication, satellite mobile communication, global positioning system, multimedia device, video device, digital audio player (e.g., MP3 player), camera, game console, drone, aircraft, narrowband Internet of Things device, machine type communication device, land vehicle, automobile, wearable device, or any other similar functional apparatuses. Those of ordinary skill in the art may also refer to the UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld, an user agent, a mobile client, a client, or some other suitable term. The node 203 is connected to the 5GC/EPC210 via the S1/NG interface. The 5GC/EPC 210 includes an MME (Mobility Management Entity)/AMF (Authentication Management Field)/SMF (Session Management Function) 211, another MME/AMF/SMF214, an S-GW (Service Gateway)/UPF (User Plane Function) 212 and a P-GW (Packet Data Network Gateway)/UPF 213. The MME/AMF/SMF 211 is a control node that processes signaling between the UE 201 and the 5GC/EPC 210. In general, MME/AMF/SMF211 provides carrier and connection management. All user IP (Internet Protocol) packets are transmitted via the S-GW/UPF 212, which is itself connected to the P-GW/UPF 213. The P-GW provides UE IP address assignment along with other functions. The P-GW/UPF 213 is connected to the Internet service 230. The Internet service 230 comprises an operator's corresponding Internet protocol service, which may include, inter alia, the Internet, an intranet, an IP Multimedia Subsystem(IMS), and a packet exchange streaming service.

As an embodiment, the UE201 corresponds to the first node in the present application.

As an embodiment, the UE201 is an User Equipment (UE).

As an embodiment, the UE201 is a BaseStation (BS) device.

As an embodiment, the UF201 is a relay.

As an embodiment, the node 203 corresponds to the second node in the present application.

As an embodiment, the node 203 is a base station device.

As an embodiment, the node 203 is an user equipment.

As an embodiment, the node 203 is a relay.

As an embodiment, the user equipment supports transmission ofa Non-Terrestrial Network (NNN).

As an embodiment, the user equipment supports transmission ofa Terres trial Network (TN).

As an embodiment, the user equipment includes a cell phone, or a terminal, or an aircraft, or an in-vehicle terminal, or a vessel, or an Internet of Things terminal, or an industrial Internet of Things terminal, or a test device, or a signaling tester.

As an embodiment, the base station device includes a Base Transceiver Station (BTS).

As an embodiment, the base station device includes node B (NdeB, NB), or gNB, or eNB, or ng-NB, or en-gNB, or Transmitter Receiver Point (TRP), or Centralized Unit (CU), or Distributed Unit (DU).

As an embodiment, the base station device supports transmis sion over a Non-Terrestrial Network.

As an embodiment, the base station device supports transmis sion over a Terrestrial Network.

As an embodiment, the base station device includes a Macro Cellular base station, or a Micro Cell base station, or a Pico Cell base station, or a Femtocell base station, or a test device, or a signaling tester.

As an embodiment, the base station device includes IntegratedAccess and Backhaul(IAB)-node, or-IAB-donor, or IAB-donor-CU, or IAB-donor-DU, or IAB-DU, or IAB-MT.

As an embodiment, the relay includes a relay, or L3 relay, or L2 relay, or a router, or a switch, or an user equipment, or a base station device.

## Embodiment 3

Embodiment 3 illustrates a schematic diagram of an embodiment of a wireless protocol architecture for an user plane and a control plane, according to one embodiment of the present application, as shown in FIG. 3. FIG. 3 is a schematic diagram illustrating an embodiment of a radio protocol architecture for the userplane 350 and the control plane 300, the FIG. 3 shows, with three layers, a radio protocol architecture for controlling the plane 300: layers 1, 2 and 3. The layer 1 (L1 layer) is the lowest layer and implements various PHY (physical layer) signal processing functions. The L1 layer will be referred to herein as PHY 301. The layer 2 (L2 layer) 305 is overPHY301, including the Medium Access Control (MAC) sublayer 302, Radio Link Control (RLC) sublayer 303, and Packet Data Convergence Protocol (PDCP) sublayer 304. The PDCP sublayer304 provides multiplexes between different radio carriers and logical channels. The PDCP sublayer 304 also provides security through the encrypted data packet, as well as providing trans-cell movement support. The RLC sublayer 303 provides segmentation and reassembly of the upper layer data packet, re-transmission of the missing data packet, and re-ordering of the data packet to compensate for out-of-order reception due to Hybrid Automatic Repeat Request (HARQ). The MAC sublayer302 provides multiplex between logical and transmission channels. The MAC sublayer 302 is also responsible for distributing various radio resources (e.g., resource blocks) in one cell. The MAC sublayer 302 is also responsible for HARQ operations. The Radio Resource Control (RRC) sublayer306 in layer 3 (L3 layer) in the control plane 300 is responsible for obtaining the radio resources (i.e., radio carrier) and configuring the lower layer using RRC signaling. The radio-protocol architecture of the userplane 350 comprises layer 1 (L1 layer) and layer 2 (L2 layer). In the userplane 350, the radio protocol architecture for the physicallayer 351, the PDCP sublayer354 in L2 layer 355, the RLC sublayer353 in L2 layer 355, and the MAC sublayer352 in L2 layer 355 is generally similar to the corresponding layers and sublayers in the control plane 300. However, the PDCP sublayer354 also provides header compression for upper-layer data packets to reduce radio transmis sion overhead. The L2 layer 355 in the userplane 350 also includes an SDAP (Service Data Adaption Protocol) sublayer356 that is responsible for mapping between QoS streams and data radio bearer (DRB) to support diversity ofthe business.

As an embodiment, the wireless protocol architecture in FIG. 3 applies to the first node in the present application.

As an embodiment, the wireless protocol architecture in FIG. 3 applies to the second node in the present application.

As an embodiment, the first signal in the present application is generated at the PHY301 or PHY351.

As an embodiment, the second signal in the present application is generated at the PHY301 or PHY351.

As an embodiment, the third signal in the present application is generated at the RRC306.

As an embodiment, the third signal in the present application is generated at the MAC302 or MAC352.

As an embodiment, the third signal in the present application is generated at the PHY301 or PHY351.

As an embodiment, the fourth signal in the present application is generated at the RRC306.

As an embodiment, the fourth signal in the present application is generated at the MAC302 or MAC352.

As an embodiment, the fourth signal in the present application is generated at the PHY301 or PHY351.

As an embodiment, the fifth signal in the present application is generated at the RRC306.

As an embodiment, the fifth signal in the present application is generated at the MAC302 or MAC352.

As an embodiment, the fifth signal in the present application is generated at the PHY301 or PHY351.

As an embodiment, the first signaling in the present application is generated at the RRC306.

As an embodiment, the first signaling in the present application is generated at the MAC302 or MAC352.

As an embodiment, the first signaling in the present application is generated at the PHY301 or PHY351.

## Embodiment 4

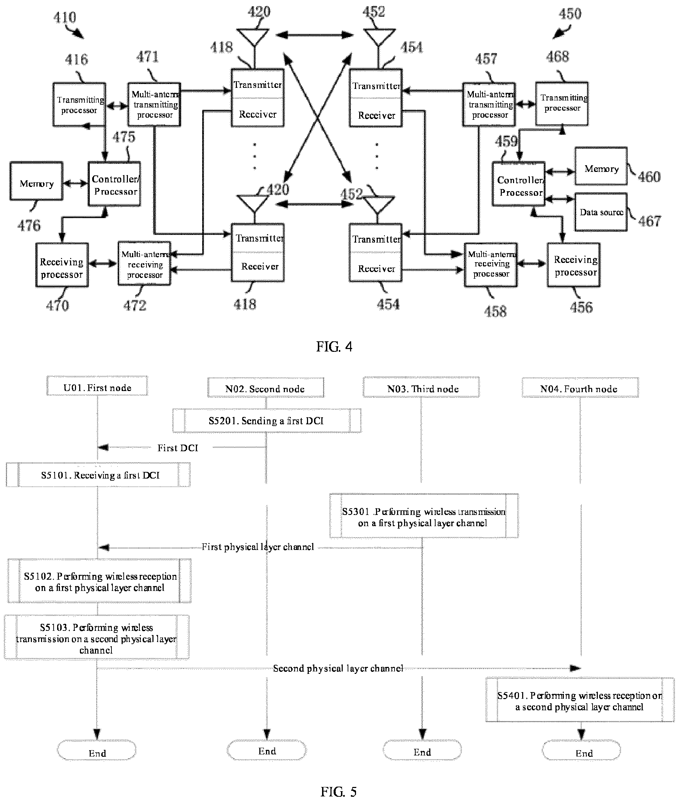

Embodiment 4 illustrates a schematic diagram of a first communication device and a second communication device according to the present application, as shown in FIG. 4. FIG. 4 is a block diagram of a first communication device 450 and a second communication device 410 in communication with each other over an access network.

The first communication device 450 comprises the controller/processor459, the memory 460, the data source 467, the transmitting processor468, the receiving processor456, the multi-antenna transmitting processor457, the multi-antenna receiving proces sor458, the transmitter/receiver 454, and the antenna 452.

The second communication device 410 comprises the controller/processor 475, the memory 476, the receiving processor 470, the transmitting processor 416, the multi-antenna receiving processor 472, the multi-antenna transmitting processor471, the transmitter/receiver 418, and the antenna 420.

In the transmission from the second communication device 410 to the first communication device 450, at the second communication device 410, the upper data packet from the core network is provided to the controller/processor475. The controller/processor 475 implements the functionality of the L2 layer. In transmission from the second communication device 410 to the first communication device 450, the controller/processor 475 provides header compres sion, encryption, packet segmentation and reordering, multiplexing between logic and the transmission channel, and radio resource distribution to the first communication device 450 based on various priority measures. The controller/processor475 is also responsible for the retransmission of the lost package and the signaling to the first communication device 450. The transmitting processor416 and the multi-antenna transmitting processor 471 implement various signal processing functions for the L1 layer (i.e., the physical layer). The transmitting processor 416 implements coding and interleaving to facilitate forward error correction (FEC) at the second communication device 410 and mapping of signal clusters based on various modulation schemes (e.g., Binary Phase Shift Keying (BPSK), Quadrature Phase Shift Keying (QPSK), M-Phase Shift Keying (M-PSK), and M-Quadrature Amplitude Modulation (M-QAM)). The multi-antenna transmitting processor471 pre-codes encoded and modulated symbols in digital space, including codebook-based pre-coding and non-codebook-based pre-coding, and beam-based processing, generating one or more spatial streams. The transmitting processor416 then maps each spatial stream to a sub-carrier, multiplexing with a reference signal (e.g., a frequency director) in the time and/or frequency domain, and then used an Inverse Fast Fourier Transform (IFFT) to generate a physical channel of the time domain multi-wave symbol stream on the carrier. The multi-antenna transmitting processor471 then sends the simulated pre-coding/beam-forming operation for the time domain multi-carrier symbol flow. Each transmitter 418 converts the baseband multi-carrier symbol flow provided by the multi-antenna transmitting processor 471 into a radio frequency flow, which is then provided to a different antenna 420.

In transmission from the second communication device 410 to the first communication device 450, at the first communication device 450, each receiver 454 receives a signal through its respective antenna 452. Each receiver 454 resumes information modulated onto a radio frequency carrier and converts the radio frequency flow into a baseband multi-carrier symbol flow to the receiving processor 456. The receiving processor 456 and the multi-antenna receiving processor 458 implement various signal processing functions of the L1 layer. The multi-antenna receiving processor 458 receives the simulated pre-coding/beam-forming operation for the baseband multi-carrier symbol flow from the receiver 454. The receiving proces sor456 uses a Fast Fourier Transform (FFT) to convert the base band multi-carrier symbol flow from the time domain to the frequency domain after receiving the analog pre-encoding/-beam-based manipulation. In the frequency domain, the physicallayer data signal and the reference signal are demultiplexed by the receiving processor456, where the reference signal is used for channel estimation and the data signal recovers any spatial stream to the first communication device 450 for destination after multi-antenna detection by the multi-antenna receiving processor 458. The symbols on each spatial stream are demodulated and restored in the receiving processor 456 and generate a soft decision. The receiving processor 456 is then decoded and de-interleaving the soft decision to restore the upper layer data and control signal transmitted by the second communication device 410 over the physical channel. The upper layer data and control signal are then provided to the controller/processor 459. The controller/-processor 459 implements the functions of the L2 layer. The controller/processor 459 may be associated with the memory 460 that stores program code and data. The memory 460 may be referred to as a computer-readable medium. In the transmission from the second communication device 410 to the second communication device 450, the controller/processor 459 provides multiplexing between the transmission and logical channel, packet reassembly, decryption, header decompression, control signal processing to recover the upper data packet from the core network. The upper data packet is then provided to all protocol layers above the L2 layer. Various control signals may also be provided to L3 for L3 processing.

In the transmission from the first communication device 450 to the second communication device 410, at the first communication device 450, the data source 467 is used to provide the upper data packet to the controller/processor 459. The data source 467 represents all protocol layers above the L2 layer. Similar to the transmission function at the second communication device 410 described in the transmission from the second communication device 410 to the first communication device 450, the controller/processor459 implements header compression, encryption, packet segmentation and re-ordering, and multiplexing between logic and transmission channels based on wireless resource allocation, implementing L2 layer functions forthe userplane and control plane. The controller/processor459 is also responsible for the retransmission of the lost package and the signaling to the second communication device 410. The transmitting processor 468 executes the modulation mapping, channel encoding, while the multi-antenna transmitting processor 457 performs digital multi-antenna spatial pre-coding, including both codebook-based pre-coding and non-codebook-based pre-coding, and beam-based processing, and then the transmitting processor468 tailors the generated spatial streamto a multi-wave/single-wave symbol stream, which is provided to a different antenna 452 via the transmitter 454 after a simulated pre-encoded/beamoperation in the multi-antenna transmitting processor 457. Each transmitter 454 first converts the baseband symbol flow provided by the multi-antenna transmitting processor 457 into a radio frequency symbol flow, which is then provided to the antenna 452.

In the transmission from the first communication device 450 to the second communication device 410, the second communication device 410 performs functions similar to those of the receiving function at the first communication device 450, as described in the transmission from the second communication device 410 to the first communication device 450. Each receiver 418 receives a radio frequency signal through its respective antenna420, converts the received radio frequency signal into a baseband signal, and provides the baseband signal to the multi-antenna receiving processor 472 and the receiving processor470. The receiving processor 470 and the multi-antenna receiving processor 472 collectively implement the functions of the L1 layer. The controller/-processor 475 implements the function of the L2 layer. The controller/processor 475 may be associated with the memory 476 storing program code and data. The memory 476 may be referred to as a computer-readable medium. In the transmission from the first communication device 450 to the second communication device 410, the controller/processor 475 provides multiplexing between the transmission and logical channel, packet reassembly, decryption, header decompression, control signal processing to recover the upper data packet from the UE450. The upper layer data packet from the controller/processor475 may be provided to the core network.

As an embodiment, the first communication device 450 comprises: at least one processor and at least one memory, and at least the one memory comprising computer program code; at least the one memory and the computer program code being configured to be used together with at least the one processor, the first communication device 450 at least: receiving a first DCI, where the first DCI including the first domain; wireless reception is performed on the first physical layer channel and wireless transmission is performed on the second physical layer channel; wherein the first domain of the first DCI is used to determine the frequency domain resource occupied by the first physicallayer channel and the frequency domain resource occupied by the second physical layer channel.

As an embodiment, the first communication device 450 comprises: a memory storing a computer-readable instruction program that, when executed by at least one processor, generates an action, the action comprising: receiving a first DCI, where the first DCI including the first domain; wireless reception is performed on the first physical layer channel and wireless transmission is performed on the second physical layer channel; wherein the first domain of the first DCI is used to determine the frequency domain resource occupied by the first physical layer channel and the frequency domain resource occupied by the second physical layer channel.

As an embodiment, the second communications device 410 includes: at least one processor, and at least one memory comprising computer program code; at least one memory and computer program code configured for use with at least one processor. The second communication device 410 at least: sending a first DCI, where the first DCI including the first domain; wireless transmission is performed on the first physical layer channel and wireless reception is performed on the second physical layer channel; wherein the first domain of the first DCI is used to determine the frequency domain resource occupied by the first physical layer channel and the frequency domain resource occupied by the second physical layer channel.

As an embodiment, the second communications device 410 includes: a memory storing a computer-readable instruction program that, when executed by at least one processor, generates an action, the action comprising: sending a first DCI, where the first DCI including the first domain; wireless transmission is performed on the first physicallayer channel and wireless reception is performed on the second physical layer channel; wherein the first domain of the first DCI is used to determine the frequency domain resource occupied by the first physical layer channel and the frequency domain resource occupied by the second physical layer channel.

As an embodiment, the antenna 452, the receiver 454, the receiving processor 456, at least one of the controller/processor459 is used to receive a first DCI.

As an embodiment, at least one of the antenna 420, the transmitter 418, the transmitting processor 416, the controller/processor475 is used to send a first DCI.

As an embodiment, at least one of the antenna 452, the receiver 454, the receiving processor 456, the controller/processor459 is used to receive a first message.

As an embodiment, at least one of the antenna 420, the transmitter 418, the transmitting processor 416, the controller/processor475 is used to send a first message.

As an embodiment, at least one of the antenna 452, the receiver 454, the receiving processor 456, the controller/processor459 is used to receive a second message.

As an embodiment, at least one of the antenna 420, the transmitter 418, the transmitting processor 416, the controller/processor475 is used to send a second message.

As an embodiment, at least one of the antenna 452, the receiver 454, the receiving processor 456, the controller/processor459 is used to perform wireless reception on a first physicallayer channel.

As an embodiment, at least one of the antenna 420, the transmitter 418, the transmitting processor 416, the controller/processor475 is used to perform wireless transmission on a first physical layer channel.

As an embodiment, at least one of the antenna 452, the transmitter 454, the transmitting processor 468, the controller/processor459 is used to perform wireless transmission on a second physical layer channel.

As an embodiment, at least one of the antenna 420, the receiver 418, the receiving processor 470, the controller/processor475 is used to perform wireless reception on a second physicallayer channel.

As an embodiment, the first communication device 450 corresponds to a first node in the present application.

As an embodiment, the second communication device 410 corresponds to a second node in the present application.

As an embodiment, the first communications device 450 is an user equipment.

As an embodiment, the first communications device 450 is an user equipment that supports a large latency difference.

As an embodiment, the first communications device 450 is a NTN-enabled userequipment.

As an embodiment, the first communications device 450 is an aircraft device.

As an embodiment, the first communications device 450 has position capabilities.

As an embodiment, the first communication device 450 does not have the positioning capabilities.

As an embodiment, the first communications device 450 is a TN-enabled user equipment.

As an embodiment, the second communications device 410 is a base station device (gNB/eNB/ng-eNB).

As an embodiment, the second communication device 410 is a base station device that supports a large latency difference.

As an embodiment, the second communication device 410 is a base station device that supportsNTN.

As an embodiment, the second communication device 410 is a satellite device.

As an embodiment, the second communications device 410 is a flight platform device.

As an embodiment, the second communications device 410 is a TN-enabled base station device.

## Embodiment 5

Embodiment 5 exemplifies a flow diagram of wireless transmission according to one embodiment of the present application, as shown in FIG. 5. It is specifically illustrated that the sequence in the present example does not limit the sequence of signal transmission and the sequence of implementation in the present application.

For the **first node U01,** in step S5101, receiving a first DCI, and the first DCI comprises a first domain; in step S5102, wireless reception is performed on the first physicallayer channel; and in step S5103, wireless transmission is performed on the second physical layer channel.

For the **second node N02,** in step S5201, sending a first DCI.

For the **third node N03,** in step S5301, wireless transmission is performed on the first physicallayer channel.

For the **fourth node N04,** in step S5401, wireless reception is performed on the second physical layer channel.

In Embodiment 5, the first domain of the first DCI is used to determine the frequency domain resource occupied by the first physical layer channel and the frequency domain resource occupied by the second physical layer channel As an embodiment, the first node U01 is an user equipment.

As an embodiment, the first node U01 is a base station device.

As an embodiment, the second node N02 is a TRP.

As an embodiment, the second node N02 is a base station device.

As an embodiment, the second node N02 is a maintenance base station of one serving cell of the first node U01.

As an embodiment, the second node N02 is an user equipment.

As an embodiment, the third node N03 is a TRP.

As an embodiment, the third node N03 is a base station device.

As an embodiment, the third node N03 is a maintenance base station of one serving cell of the first node U01.

As an embodiment, the third node N03 is an user equipment.

As an embodiment, the fourth node N04 is a TRP.

As an embodiment, the fourth node N04 is a base station device.

As an embodiment, the fourth node N04 is a maintenance base station of one serving cell of the first node U01.

As an embodiment, the fourth node N04 is an user equipment.

As an embodiment, the third node N03 and the second node N02 are the same.

As an embodiment, the third node N03 and the second node N02 are different.

As an embodiment, the fourth node N04 and the second node N02 are the same.

As an embodiment, the fourth node N04 and the second node N02 are different.

As an embodiment, the third node N03 and the fourth node N04 are the same.

As an embodiment, the third node N03 and the fourth node N04 are different.

As an embodiment, the step S5101 precedes the steps S5102 and S5103.

As an embodiment, the step S5102 precedes the step S5103.

As an embodiment, the step S5102 follows the step S5103.

As an embodiment, the sequence ofthe steps S5102 and S5103 is not limited.

As an embodiment, the first DCI is used to determine wireless reception is performed on the first physical layer channel and wireless transmission is performed on the second physical layer channel.

As an embodiment, wireless reception is performed on a first physicallayer channel and wireless transmission is performed on a second physical layer channel as a response to the first DCI being received.

As an embodiment, after the first DCI is received, wireless reception is performed on the first physical layer channel and wireless transmission is performed on the second physicallayer channel.

## Embodiment 6

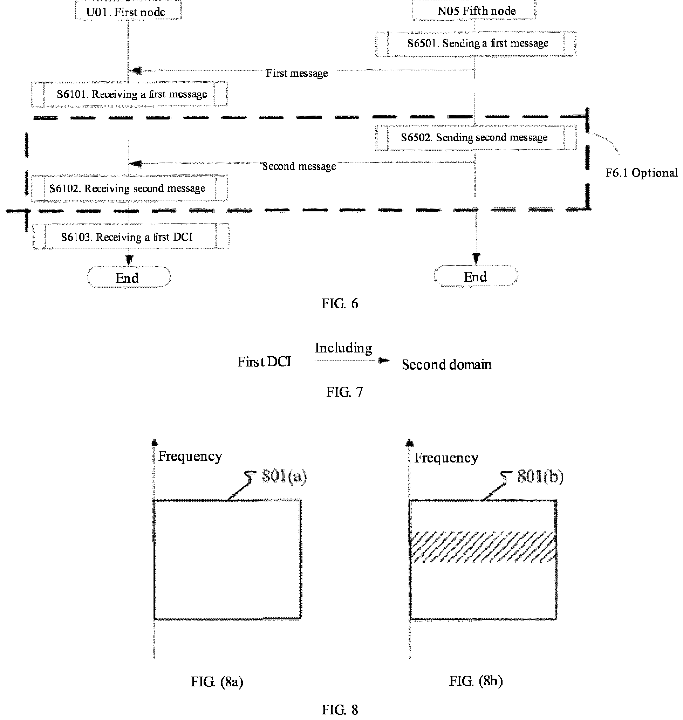

Embodiment 6 exemplifies a flow diagram of wireless transmission according to one embodiment of the present application, as shown in FIG. 6. It is specifically illustrated that the sequence in the present example does not limit the sequence of signal transmission and the sequence of implementation in the present application.

For the **first node U01,** in step S6101, receiving a first message; in step S6102, receiving a second message and in step S6103, receiving a first DCI.

For the **fifth node N05,** in step S6501, sending a first message is sent; in step S6502, sending a second message.

In Embodiment 6, the first message is used to determine the load size of the first domain of the first DCI; the first message is used to determine a first frequency domain resource pool; at least one of the frequency domain resources occupied by the first physical layer channel or the frequency domain resources occupied by the second physical layer channel belongs to the first frequency domain resource pool; the first DCI includes a first domain; the first domain of the first DCI is used to determine the frequency domain resources occupied by the first physical layer channel and the frequency domain occupied by the second physical layer.

As an embodiment, the fifth node N05 is a base station device.

As an embodiment, the fifth node N05 is a maintenance base station of one serving cell of the first node U01. As an embodiment, the fifth node N05 and the second node N02 are the same.

As an embodiment, the fifth node N05 and the second node N02 are different.

As an embodiment, the dashed line box F6.1 is optional.

As an embodiment, the dashed line box F6.1 is present.

As a sub-embodiment of the present embodiment, receiving the second message.

As an embodiment, the dashed line box F6.1 is absent.

As a sub-embodiment of the present embodiment, the second message is not received.

As an embodiment, the first message includes at least one Radio Res ource Control (RRC) message.

As an embodiment, the first message includes at least one RRC Information Element (IE).

As an embodiment, the first message includes at least one RRC Field.

As an embodiment, the first message is System Information Block (SIB).

As an embodiment, the first message is a broadcast message.

As an embodiment, the first message is a private message.

As an embodiment, the first message is used to indicate the size of a resource block group.

As an embodiment, the first message is used to indicate whether or not to intersect.

As an embodiment, the first message is used to indicate a resource allocation type.

As an embodiment, the first message is configured to a serving cell.

As an embodiment, the first message is configured to the first frequency domain resource pool.

As an embodiment, the first message is configured to a BWP.

As an embodiment, the first message is configured to a first BWP.

As an embodiment, the first message is used to determine a first BWP.

As an embodiment, the first message includes an index of a first BWP.

As an embodiment, the first message includes a BWP-Id of a first BWP.

As an embodiment, the first message includes a size of a first BWP.

As an embodiment, the first message includes a type of frequency domain resource allocation for a first BWP.

As an embodiment, the first message is used to determine a Frequency domain location of the first BWP and a bandwidth of a first BWP.

As an embodiment, the first message indicates a Resource Indicator Value (RIV) for a frequency domain location of the first BWP and a bandwidth of a first BWP.

As an embodiment, the first message indicates an index of the frequency domain location of a first BWP and the bandwidth of a first BWP.

As an embodiment, the first message is used to indicate a frequency domain location of the first BWP and a bandwidth of the first BWP.

As an embodiment, the first message includes a RRC domain, the one RRC domain of the first message being used to determine a frequency domain location of the first BWP and a bandwidth of the first BWP.

As a sub-embodiment of the present embodiment, the name of the one RRC domain of the first message includes locationAndBandwidth.

As a sub-embodiment of the present embodiment, the one RRC domain of the first message is the localizationAndBandwidth domain.

As a sub-embodiment of the present embodiment, the value of one locationAndBandwidth domain refers to the Resource Indicator Value (RIV) of 3GPP TS 38.214.

As an embodiment, the first message includes a Subcarrier Spacing (SCS) of the first BWP.

As an embodiment, the first message includes bwp-Id.

As an embodiment, the first message includes a bwp-Common.

As an embodiment, the first message includes a bwp-Dedicated.

As an embodiment, the first message includes a subcarrierSpacing.

As an embodiment, the first message includes a locationAndBandwidth.

As an embodiment, the first message includes a cyclicPrefix.

As an embodiment, the first message includes a PUCCH-Config.

As an embodiment, the first message includes a PUSCH-Config.

As an embodiment, the first message includes a PDCCH-Config.

As an embodiment, the first message includes a PDSCH-Config.

As an embodiment, the first message includes a sourceAllocationDCI.

As an embodiment, the first message includes a resourceAllocation.

As an embodiment, the first message includes a resourceAllocation domain or a resourceAllocationDCI domain, and the resourceAllocation domain or resourceAllocationDCI domain is set as one of the resourceAllocationType0, resourceAllocationType1 or dynamicSwitch.

As an embodiment, the first message includes a resourceAllocation domain or a resourceAllocationDCI domain, and the resourceAllocation or resource Allocation DCI domain is set as any one of resourceAllocationType0 or resourceAllocationType1.

As an embodiment, the first message includes a resourceAllocation domain or a resourceAllocationDCI domain, and the resource Allocation domain or the resourceAllocationDCI domain is set to resourceAllocationType0 or resourceAllocationType1.

As an embodiment, the first message includes a rbg-Size.

As an embodiment, the first message includes a vrb-ToPRB-Interleaver.

As an embodiment, the first message includes a vrb-ToPRB-InterleaverDCI-1-2-r16.

As an embodiment, the first message includes a BWP IE.

As an embodiment, the first message includes a push-PowerControl.

As an embodiment, the first message includes a mcs-Table.

As an embodiment, the first message includes configuration information for the first physical layer channel, and the first message includes configuration information for the second physical layer channel.

As an embodiment, the name of the first message includes at least one of BWP, Full, Duplex, Fullduplex, Subband, Common or Dedicated.

As an embodiment, the first message includes configuration information for the first physical layer channel and configuration information for the second physical layer channel of the first frequency domain resource pool.

As an embodiment, the first message includes a PUSCH-Config, and the PUSCH-Config includes configuration information for the second physical layer channel; the first message includes a PDSCH-Config, and the PDSCH-Config includes configuration information for the first physical layer channel.

As an embodiment, the first message includes a PUSCH-ConfigCommon, and the PUSCH-ConfigCommon includes configuration information for the second physical layer channel; the first message includes a PDSCH - ConfigCommon, and the PDSCH-ConfigCommon includes configuration information for the first physical layer channel.

As an embodiment, the first message includes only one BWP IE.

As an embodiment, the first message includes a BWP-DownlinkCommon IE, and the BWP-DownlinkCommon IE includes at least one of PDSCH-ConfigCommon or PDCCH-ConfigCommon, and the BWP-DownlinkCommon IE includes at least one of PUSCH-Config-

Common, PUCCH-ConfigCommon, RACH-ConfigCommon, MsgA-ConfigCommon orAdditionalRACH-ConfigList.

As an embodiment, the first message includes a BWP-Downlink IE, and the BWP-Downlink IE includes at least one ofPDSCH-Config or PDCCH-Config, and the BWP-Downlink IE includes at least one of PUSCH-Config, PUCCH-Config, RACH-ConfigDedicated, ConfiguredGrantConfig, SRS-Config or BeamFailureRecoveryConfig.

As an embodiment, the first message includes a BWP-UplinkCommon IE, and the BWP-UplinkCommon IE includes at least one of PUSCH-ConfigCommon, PUCCH-ConfigCommon,          RACH-ConfigCommon, MsgA-ConfigCommon or AdditionalRACH-ConfigList, and the BWP-UplinkCommon IE includes at least one ofPDSCH-ConfigCommon or PDCCH-ConfigCommon.

As an embodiment, the first message includes a BWP-Uplink IE, and the BWP-Uplink IE includes at least one of PUSCH-Config, PUCCH-Config, RACH-ConfigDedicated, ConfiguredGrantConfig, SRS-Config or BeamFailureRecoveryConfig, and the BWP-Uplink IE includes at least one of PDSCH-Config or PDCCH-Config.

As an embodiment, the first message is used to determine a frequency domain resource corresponding to the first frequency domain resource pool.

As an embodiment, the first message indicates the first frequency domain resource pool.

As an embodiment, the first message includes configuration information ofthe first frequency domain resource pool.

As an embodiment, the first message is used to determine each PRB of the first frequency domain resource pool.

As an embodiment, the first message includes an index of the first frequency domain resource pool.

As a sub-embodiment of the present embodiment, the index of the first frequency domain resource pool is indicated by BWP-Id.

As a sub-embodiment of the present embodiment, the index of the first frequency domain resource pool is a non-negative integer.

As a sub-embodiment of the present embodiment, the index of the first frequency domain resource poolis an integer not less than 0 and not greater than the maxNrofBWPs, and the maxNrofBWPs being a positive integer.

As a sub-embodiment of the present embodiment, the first message includes a bwp-Id domain that indicates an index of the first frequency domain resource pool.

As an embodiment, the first message indicates the first frequency domain resource pool in the first BWP.

As an embodiment, the first message is used to determine an index of each PRB of the first frequency domain resource pool in the first BWP.

As an embodiment, the first message is used to determine a first frequency domain resource subset.

As an embodiment, the first message is used to configure a first frequency domain resource subset.

As an embodiment, the first message is used to configure a frequency domain resource of the first frequency domain resource subset.

As an embodiment, the first message is used to configure PRB occupied by the first frequency domain resource subset.

As an embodiment, the first message is used to configure a frequency domain location of the first frequency domain resource subset.

As an embodiment, the first message is used to configure the bandwidth ofthe first frequency domain resource subset.

As an embodiment, the first message is used to configure the first frequency domain resource subset in the first frequency domain resource pool.

As an embodiment, the first message is used to calculate a load size of the first domain of the first DCI.

As an embodiment, the first message indicates a load size of the first domain of the first DCI.

As an embodiment, the configuration information in the first message is used to determine the load size of the first domain of the first DCI.

As an embodiment, the locationAndBandwidth in the first message is used to calculate the load size of the first domain of the first DCI.

As an embodiment, the first message indicates that a size of the first BWP is used to determine a load size of the first domain of the first DCI.

As an embodiment, the type of frequency domain resource distribution indicated by the first message for the first BWP and the size of the first BWP indicated by the first message are used to determine the load size of the first domain of the first DCI.

As an embodiment, the type of frequency domain resource allocation indicated by the first message forthe first BWP is used to determine the load size of the first domain of the first DCI.

As an embodiment, the size of the first BWP indicated by the first message are used to determine the load size of the first domain of the first DCI.

As an embodiment, the type of frequency domain resource distribution indicated by the first message for the first BWP and the size of the first BWP indicated by the first message are used to determine the load size of the first domain of the first DCI.

As an embodiment, the first BWP is a BWP.

As an embodiment, the first BWP is a UL BWP.

As an embodiment, the first BWP is a DL BWP.

As an embodiment, the first BWP is an SL BWP.

As an embodiment, the first BWP is an initial BWP.

As an embodiment, the first BWP is a Default BWP.

As an embodiment, the first BWP is an active BWP.

As an embodiment, the first BWP is not an initial BWP.

As an embodiment, the first BWP is directed to the first cell.

As an embodiment, the first BWP is directed to the primary carrier of the first cell.

As an embodiment, the first BWP is directed to a secondary carrier of the first cell.

As an embodiment, the first BWP is directed to an uplink carrier.

As an embodiment, the first BWP is directed to a downlink carrier.

As an embodiment, the first BWP is for a full-duplex dedicated carrier.

As an embodiment, the first BWP is configured as a downlink transmission.

As an embodiment, the first BWP is configured as an uplink transmission.

As an embodiment, the first BWP is configured as an uplink transmission and a downlink transmission.

As an embodiment, the first BWP includes Q1 frequency domain resource blocks, and the Q1 being a positive integer.

As an embodiment, the first BWP includes Q1 frequency domain resource block group, and the Q1 being a positive integer.

As an embodiment, the Q1 is $N_{RB}^{UL,BWP}$ .

As an embodiment, the Q1 is $N_{RB}^{DL,BWP}$ .

As an embodiment, the first BWP is a UL BWP, $N_{RB}^{UL,BWP}$ is used to determine the load size of the first domain of the first DCI, and $N_{RB}^{UL,BWP}$ is the size of the first BWP.

As an embodiment, the first BWP is a UL BWP, the load size of the first domain of the first DCI is equal to the $\left\lceil \log_2 (N_{RB}^{UL,BWP} (N_{RB}^{UL,BWP} + 1)/2) \right\rceil$ bits.

As an embodiment, the first BWP is a UL BWP, the load size of the first domain of the first DCI is equal to the

$$\max \left( \left\lceil \log_2 (N_{RB}^{UL,BWP} (N_{RB}^{UL,BWP} + 1)/2) \right\rceil , N_{RBG} \right) + 1$$

bits.

As an embodiment, the first BWP is a UL BWP, the load size of the first domain of the first DCI is equal to the $N_{RBG}$ bits.

As an embodiment, the first BWP is a DL BWP, $N_{RB}^{DL,BWP}$ is used to determine the load size of the first domain of the first DCI, and the $N_{RB}^{DL,BWP}$ is the size of the first BWP.

As an embodiment, only when Control Resource Set (CORESET)0 is not configured in the first cell, the $N_{RB}^{DL,BWP}$ is the size of the first BWP.

As an embodiment, the first BWP is a DL BWP, $N_{RB}^{DL,BWP}$ is used to determine the load size of the first domain of the first DCI, and the $N_{RB}^{DL,BWP}$ is the size of CORESET 0; the CORESET 0 is configured in the first cell.

As an embodiment, the first BWP is a DL BWP, and the load size of the first domain of the first DCI equal to $\left\lceil \log_2 (N_{RB}^{DL,BWP} (N_{RB}^{DL,BWP} + 1)/2) \right\rceil$ bits.

As an embodiment, the first BWP is a DL BWP, and the load size of the first domain of the first DCI equal to

$$\max \left( \left\lceil \log_2 (N_{RB}^{UL,BWP} (N_{RB}^{UL,BWP} + 1)/2) \right\rceil, N_{RBG}' \right) + 1$$

bits.

As an embodiment, the first BWP is a DL BWP, and the load size of the first domain of the first DCI equal to $N_{RBG}$ bits.

As an embodiment, $N_{RBG}$ reference to Section 6.1.2.2.1 of 3GPP TS 38.214.

As an embodiment, the $N_{RBG}$ is for the first BWP.

As an embodiment, the size of the first BWP refers to the number of frequency domain resource blocks occupied by the first BWP.

As an embodiment, the size of the first BWP refers to the number of frequency domain resource block group occupied by the first BWP.

As an embodiment, the size of the first BWP refer to the bandwidth of the first BWP.

As an embodiment, the bandwidth of the first BWP is used to determine the size of the first BWP.

As an embodiment, the first frequency domain resource pool includes a frequency band.

As an embodiment, the first frequency domain resource pool includes a subband.

As an embodiment, the first frequency domain res ource pool includes a frequency range.

As an embodiment, the first frequency domain resource pool includes a frequency range determined at one frequency domain location and one bandwidth.

As an embodiment, the first frequency domain resource pool includes a continuous frequency resource.

As an embodiment, the first frequency domain resource pool includes a non -continuous frequency resource.

As an embodiment, the first frequency domain resource pool includes P1 frequency domain resource blocks, and the P1 being a positive integer.

As an embodiment, the first frequency domain resource pool comprises a P1 frequency domain resource block group, and the P1 being a positive integer.

As an embodiment, the first frequency domain resource pool includes at least one BWP.

As an embodiment, the first frequency domain resource pool belongs to a first BWP.

As an embodiment, the first frequency domain resource poolis a BWP.

As an embodiment, the first frequency domain resource poolis the first BWP.

As a sub-embodiment of the present embodiment, the "first frequency domain resource pool" may be replaced with: First BWP.

As an embodiment, the first frequency domain resource poolis a full or part of the frequency domain resources in the first BWP.

As an embodiment, the number of PRBs occupied by the first frequency domain resource pool is equal-to the number of PRBs occupied by the first BWP.

As an embodiment, the number of PRBs occupied by the first frequency domain resource pool is not greater than the number of PRBs occupied by the first BWP.

As an embodiment, the number of PRBs occupied by the first frequency domain resource poolis less than the number of PRBs occupied by the first BWP.

As an embodiment, the PRBs occupied by the first frequency domain resource pool in the first BWP are configurable.

As an embodiment, the first frequency domain resource poolis configured as a downlink transmission.

As an embodiment, the first frequency domain resource poolis configured as an uplink transmission.

As an embodiment, the first frequency domain resource pool is configured as an uplink transmission and a downlink transmission.

As an embodiment, the frequency domain resources occupied by the first physicallayer channel belong to the first frequency domain resource pool.

As an embodiment, the frequency domain resources occupied by the second physical layer channel belong to the first frequency domain resource pool.

As an embodiment, the frequency domain resource occupied by the first physicallayer channel belongs to the first frequency domain resource pool, and the frequency domain resource occupied by the second physical layer channel belongs to the first frequency domain resource pool.

As an embodiment, the overlapping portion between the frequency domain resource indicated by the first domain of the first DCI and the first frequency domain resource pool are used to determine the frequency domain resource occupied by the first physicallayer channel.

As a sub-embodiment of the present embodiment, the overlapping portion between the frequency domain resource indicated by the first domain ofthe first DCI and the first frequency domain resource pool are the frequency domain resource occupied by the first physical layer channel.

As a sub-embodiment ofthe present embodiment, the frequency domain resource occupied by the first physical layer channel belongs to the overlapping portion between the frequency domain resource indicated by the first domain of the first DCI and the first frequency domain resource pool.

As a sub-embodiment of the present embodiment, the frequency domain resources occupied by the first physical layer channel include all of the frequency domain resources in the overlapping portion between the frequency domain resources indicated by the first domain of the first DCI and the first frequency domain resource pool.

As a sub-embodiment of the present embodiment, the frequency domain resources occupied by the first physical layer channel include part of the frequency domain resources in the overlapping portion between the frequency domain resources indicated by the first domain of the first DCI and the first frequency domain resource pool.

As an embodiment, the overlapping portion between the frequency domain resource indicated by the first domain of the first DCI and the first frequency domain resource pool are used to determine the frequency domain resource occupied by the second physical layer channel.

As a sub-embodiment of the present embodiment, the overlapping portion between the frequency domain resource indicated by the first domain ofthe first DCI and the first frequency domain resource pool are the frequency domain resource occupied by the second physicallayer channel.

As a sub-embodiment of the present embodiment, the frequency domain resources occupied by the second physicallayer channel belong to the overlapping portion between the frequency domain resources indicated by the first domain of the first DCI and the first frequency domain resource pool.

As a sub-embodiment of the present embodiment, the frequency domain resources occupied by the second physical layer channel include all of the frequency domain resources in the overlapping portion between the frequency domain resources indicated by the first domain of the first DCI and the first frequency domain resource pool.

As a sub-embodiment of the present embodiment, the frequency domain resources occupied by the second physical layer channel include part of the frequency domain resources in the overlapping portion between the frequency domain resources indicated by the first domain of the first DCI and the first frequency domain resource pool.

As an embodiment, the overlapping portion between the frequency domain resource indicated by the first domain of the first DCI and the first frequency domain resource pool are used to determine the frequency domain resource occupied by the first physical layer channel and the frequency domain resource occupied by the second physicallayer channel.

As a sub-embodiment of the present embodiment, the overlapping portion between the frequency domain resource indicated by the first domain ofthe first DCI and the first frequency domain resource pool are the frequency domain resource occupied by the first physical layer channel and the frequency domain resource occupied by the second physical layer channel.

As a sub-embodiment of the present embodiment, both the frequency domain resources occupied by the first and second physical layer channels belong to the overlapping portion between the frequency domain resources indicated by the first domain of the first DCI and the first frequency domain resource pool.

As a sub-embodiment of the present embodiment, the frequency domain resources occupied by the first physical layer channel include all or part of the frequency domain resources in the overlapping portion between the frequency domain resources indicated by the first domain of the first DCI and the first frequency domain resource pool; the frequency domain resources occupied by the second physical layer channel include all or part of th e frequency domain resources in the overlapping portion between the frequency domain resources indicated by the first domain of the first DCI and the first frequency domain resource pool.

As an embodiment, the overlapping portion between the frequency domain resource indicated by the first domain of the first DCI and the first BWP are used to determine the frequency domain resource occupied by the first physicallayer channel.

As a sub-embodiment of the present embodiment, the overlapping portion between the frequency domain resource indicated by the first domain ofthe first DCI and the first BWP are the frequency domain res ource occupied by the first physicallayer channel.

As a sub-embodiment of the present embodiment, the frequency domain resource occupied by the first physical layer channel belongs to the overlapping portion between the frequency domain resource indicated by the first domain of the first DCI and the first BWP.

As a sub-embodiment of the present embodiment, the frequency domain resources occupied by the first physical layer channel include all of the frequency domain resources in the overlapping portion between the frequency domain resources indicated by the first domain of the first DCI and the first BWP.

As a sub-embodiment of the present embodiment, the frequency domain resources occupied by the first physical layer channel include part of the frequency domain resources in the overlapping portion between the frequency domain resources indicated by the first domain of the first DCI and the first BWP.

As an embodiment, the overlapping portion between the frequency domain resource indicated by the first domain of the first DCI and the first BWP are used to determine the frequency domain resource occupied by the second physical layer channel.

As a sub-embodiment of the present embodiment, the overlapping portion between the frequency domain resource indicated by the first domain ofthe first DCI and the first BWP are the frequency domain resource occupied by the second physical layer channel.

As a sub-embodiment of the present embodiment, the frequency domain resource occupied by the second physicallayer channel belongs to the overlapping portion between the frequency domain resource indicated by the first domain of the first DCI and the first BWP.

As a sub-embodiment of the present embodiment, the frequency domain resources occupied by the second physical layer channel include all of the frequency domain resources in the overlapping portion between the frequency domain resources indicated by the first domain of the first DCI and the first BWP.

As a sub-embodiment of the present embodiment, the frequency domain resource occupied by the second physical layer channel includes part of the frequency domain resources in the overlapping portion between the frequency domain resources indicated by the first domain of the first DCI and the first BWP.

As an embodiment, the overlapping portion between the frequency domain resource indicated by the first domain of the first DCI and the first BWP are used to determine the frequency domain resource occupied by the first physicallayer channel and the frequency domain resource occupied by the second physical layer channel.

As a sub-embodiment of the present embodiment, the overlapping portion between the frequency domain resource indicated by the first domain ofthe first DCI and the first BWP are the frequency domain resource occupied by the first physical layer channel and the frequency domain resource occupied by the second physical layer channel.

As a sub-embodiment of the present embodiment, both the frequency domain resources occupied by the first and second physical layer channels belong to the overlapping portion between the frequency domain resources indicated by the first domain of the first DCI and the first BWP.

As a sub-embodiment of the present embodiment, the frequency domain resources occupied by the first physical layer channel include all or part of the frequency domain resources in the overlapping portion between the frequency domain resources indicated by the first domain of the first DCI and the first BWP; the frequency domain resources occupied by the second physical layer channel include all or part of the frequency domain resources in the overlapping portion between the frequency domain resources indicated by the first domain of the first DCI and the first BWP.

As an embodiment, the overlapping portion between the frequency domain resources indicated by the first domain of the first DCI and the first frequency domain resource pool are used to determine the frequency domain resources occupied by the first physical layer channel; the overlapping portion between the frequency domain resources indicated by the first domain of the first DCI and the first BWP are the frequency domain resources occupied by the second physical layer channel.

As an embodiment, the overlapping portion between the frequency domain resource indicated by the first domain of the first DCI and the first frequency domain resource pool are used to determine the frequency domain resource occupied by the second physical layer channel; the overlapping portion between the frequency domain resource indicated by the first domain ofthe first DCI and the first BWP are the frequency domain resource occupied by the first physicallayer channel.

As an embodiment, the overlapping portion between the frequency domain resource indicated by the first domain of the first DCI and the first frequency domain resource pool are used to determine the frequency domain resource occupied by the first physical layer channel; the overlapping portion between the frequency domain resource indicated by the first domain of the first DCI and the first frequency domain resource pool are used to determine the frequency domain resource occupied by the second physical layer channel.

As an embodiment, the overlapping portion between the frequency domain resource indicated by the first domain of the first DCI and the first BWP are used to determine the frequency domain resource occupied by the second physical layer channel; the overlapping portion between the frequency domain resource indicated by the first domain of the first DCI and the first BWP are the frequency domain resource occupied by the first physical layer channel.

As an embodiment, the overlapping portion between the frequency domain resource indicated by the first domain of the first DCI and the first frequency domain resource pool are used to determine the frequency domain resource occupied by the first physical layer channel; the overlapping portion between the frequency domain resource indicated by the first domain ofthe first DCI and the first frequency domain resource pool are the frequency domain resource occupied by the second physical layer channel.

As an embodiment, the overlapping portion between the frequency domain resource indicated by the first domain of the first DCI and the first frequency domain resource pool are used to determine the frequency domain resource occupied by the second physical layer channel; the overlapping portion between the frequency domain resource indicated by the first domain ofthe first DCI and the first frequency domain resource pool are the frequency domain resource occupied by the first physical layer channel.

As an embodiment, the first frequency domain resource pool is used for at least the first and second physical layer channels.

As a sub-embodiment of the present embodiment, the first message is configured to the first BWP.

As a sub-embodiment of the present embodiment, the first message is configured to the first frequency domain resource pool.

As a sub-embodiment of the present embodiment, the first frequency domain resource pool is used for uplink transmission and downlink transmission.

As a sub-embodiment of the present embodiment, the first frequency domain resource pool is used for uplink transmission and sidelink transmission.

As a sub-embodiment of the present embodiment, the first frequency domain resource pool is used for downlink transmission and sidelink transmission.

As a sub-embodiment of the present embodiment, the first frequency domain resource pool is used for full-duplex.

As a sub-embodiment of the present embodiment, the first frequency domain resource pool is used for subband non-overlapping full-duplex

As a sub-embodiment of the present embodiment, the first frequency domain resource pool is used for subband full-duplex.

As an embodiment, the first frequency domain resource subset includes P3 frequency domain resource blocks, and the P3 is a positive integernot greater than the P1.

As an embodiment, the first frequency domain resource subset includes P3 frequency domain resource block group, and the P3 is a positive integer not greater than the P1.

As an embodiment, the first frequency domain resource subset belongs to the first frequency domain resource pool.

As an embodiment, the first frequency domain resource subset belongs to the first BWP.

As an embodiment, the first frequency domain resource subsetis part of the frequency domain resource in the first BWP.

As an embodiment, the first frequency domain resource subset is all of the frequency domain resources in the first BWP.

As an embodiment, the first frequency domain resource subset is a true subset ofthe first BWP.

As an embodiment, the first frequency domain resource subset is a subset ofthe first BWP.

As an embodiment, the first frequency domain resource subset is configured as uplink transmissions and the frequency bands outside the first frequency domain resource subset in the first pool are configured as downlink transmissions.

As an embodiment, the first frequency domain resource subset is configured as a downlink link transmission, and the frequency band outside the first frequency domain resource subset in the first poolis configured as an uplink transmission.

As an embodiment, the first frequency domain resource subset is configured as uplink transmissions and the first frequency domain resource poolis configured as downlink transmissions.

As an embodiment, the first frequency domain resource subset is configured as downlink transmissions and the first frequency domain resource poolis configured as uplink transmissions.

As an embodiment, the frequency domain resources occupied by the first physicallayer channel belong to the first frequency domain resource subset.

As an embodiment, the frequency domain resources occupied by the second physicallayer channel belong to the first frequency domain resource subset.

As an embodiment, the frequency domain resources occupied by the first physicallayer channel belong to the first frequency domain resource pool, and the frequency domain resources occupied by the second physical layer channel belong to the first frequency domain resource subset.

As an embodiment, the frequency domain resources occupied by the first physicallayer channel belong to the first frequency domain resource subset, and the frequency domain resources occupied by the second physical layer channel belong to the first frequency domain resource pool.

As an embodiment, the overlapping portion between the frequency domain resource indicated by the first domain of the first DCI and the first frequency domain resource subset are used to determine the frequency domain resource occupied by the second physical layer channel.

As a sub-embodiment of the present embodiment, the overlapping portion between the frequency domain resource indicated by the first domain of the first DCI and the first frequency domain resource subset are the frequency domain resources occupied by the second physicallayer channel.

As a sub-embodiment of the present embodiment, the frequency domain resource occupied by the second physicallayer channel belongs to the overlapping portion between the frequency domain resource indicated by the first domain of the first DCI and the first frequency domain resource subset.

As a sub-embodiment of the present embodiment, the frequency domain resources occupied by the second physical layer channel include all of the frequency domain resources in the overlapping portion between the frequency domain resources indicated by the first domain of the first DCI and the first frequency domain resource subset.

As a sub-embodiment of the present embodiment, the frequency domain resource occupied by the second physical layer channel includes part of the frequency domain resources in the overlapping portion between the frequency domain resources indicated by the first domain of the first DCI and the first frequency domain resource subset.

As an embodiment, the overlapping portion between the frequency domain resource indic ated by the first domain of the first DCI and the first frequency domain resource subset are used to determine the frequency domain resource occupied by the first physicallayer channel.

As a sub-embodiment of the present embodiment, the overlapping portion between the frequency domain resource indicated by the first domain of the first DCI and the first frequency domain resource subset are the frequency domain resources occupied by the first physical layer channel.

As a sub-embodiment of the present embodiment, the overlapping portion between the frequency domain resource occupied by the first physical layer channel belongs to the frequency domain resource indicated by the first domain of the first DCI and the first frequency domain resource subset.

As a sub-embodiment of the present embodiment, the overlapping portion between the frequency domain resources occupied by the first physical layer channel include all of the frequency domain resources indicated by the first domain of the first DCI and the first frequency domain resource subset.

As a sub-embodiment of the present embodiment, the frequency domain resources occupied by the first physical layer channel include part of the frequency domain resources in the overlapping portion between the frequency domain resources indicated by the first domain of the first DCI and the first frequency domain resource subset.

As an embodiment, the overlapping portion between the frequency domain resources indicated by the first domain of the first DCI and the first frequency domain resource subset are used to determine the frequency domain resources occupied by the first physical layer channel; the portion outside the overlapping portion between the frequency domain resources indicated by the first domain of the first DCI and the first frequency domain resource subset in the overlapping portion between the frequency domain resources indicated by the first domain of the first DCI and the first frequency domain resource pool are used to determine the frequency domain resource s occupied by the first physicallayer channel.

As an embodiment, the overlapping portion between the frequency domain resource indicated by the first domain of the first DCI and the first frequency domain resource subset are used to determine the frequency domain resources occupied by the second physical layer channel; the portion outside the overlapping portion between the frequency domain resources indicated by the first domain of the first DCI and the first frequency domain resource subset in the overlapping portion between the frequency domain resources indicated by the first domain of the first DCI and the first frequency domain resource pool are used to determine the frequency domain resources occupied by the second physical layer channel.

As an embodiment, the second message includes at least one RRC message.

As an embodiment, the second message includes at least one RRC IE.

As an embodiment, the second message includes at least one RRC domain.

As an embodiment, the second message is a systemmessage.

As an embodiment, the second message is a broadcast message.

As an embodiment, the second message is a private message.

As an embodiment, the second message is used to indicate the size of a resource block group.

As an embodiment, the second message is used to indicate whether or not to intersect.

As an embodiment, the second message is used to indicate a resource allocation type.

As an embodiment, the second message is configured to a serving cell.

As an embodiment, the second message is configured to a BWP.

As an embodiment, the second message is configured to the first BWP.

As an embodiment, the second message is configured to the second BWP.

As an embodiment, the second message is used to determine the second BWP.

As an embodiment, the second message includes an index of the second BWP.

As an embodiment, the second message includes a BWP-Id of the second BWP.

As an embodiment, the second message is used to determine a Frequency domain location of the second BWP and a bandwidth of the first BWP.

As an embodiment, the second message includes a locationAndBandwidth domain, the one locationAndBandwidth domain of the second message being used to determine a frequency domain location of the second BWP and a bandwidth of the second BWP.

As an embodiment, the second message is configured to a second frequency domain resource pool.

As an embodiment, the second message includes a bwp-Id.

As an embodiment, the second message includes a bwp-Common.

As an embodiment, the second message includes a bwp-Dedicated.

As an embodiment, the second message includes a sub-carrier spacing ofthe second BWP.

As an embodiment, the second message includes a subcarrierSpacing.

As an embodiment, the second message includes a locationAndBandwidth.

As an embodiment, the second message includes a cyclicPrefix.

As an embodiment, the second message includes aPUCCH-Config.

As an embodiment, the second message includes a PUSCH-Config.

As an embodiment, the second message includes aPDCCH-Config.

As an embodiment, the second message includes a PDSCH-Config.

As an embodiment, the second message includes a resourceAllocationDCI.

As an embodiment, the second message includes a resourceAllocation.

As an embodiment, the second message includes any one of the resourceAllocation domain or the resourceAllocationDCI domain, and the resourceAllocationDCI domain is set as one of the resourceAllocationType0, resourceAllocationType1 or dynamic Switch.

As an embodiment, the second message includes a rbg-Size.

As an embodiment, the second message includes a vrb-ToPRB-Interleaver.

As an embodiment, the second message includes a vrb-ToPRB-InterleaverDCI-1-2-r16.

As an embodiment, the second message includes a push-PowerControl.

As an embodiment, the second message includes a mcs-Table.

As an embodiment, the second message is used to determine a second frequency domain resource pool.

As an embodiment, the second message is used to determine a frequency domain resource of the second frequency domain resource pool.

As an embodiment, the second message indicates the second frequency domain resource pool.

As an embodiment, the second message includes configuration information for the second frequency domain resource pool.

As an embodiment, the second message is used to determine each PRB of the second frequency domain resource pool.

As an embodiment, the second message includes an index of the second frequency domain resource pool.

As a sub-embodiment of the present embodiment, the index of the second frequency domain resource pool is indicated by BWP-Id.

As a sub-embodiment of the present embodiment, the index of the second frequency domain resource pool is a non-negative integer.

As a sub-embodiment of the present embodiment, the index of the second frequency domain resource pool is an integer that is not less than 0 and not greater than maxNrofBWPs, and the maxNrofBWPs being a positive integer.

As a sub-embodiment of the present embodiment, the second message includes a bwp-Id domain, and the bwp-Id domain indicates an index of the second frequency domain resource pool.

As an embodiment, the second message indicates the second frequency domain resource pool in the first BWP.

As an embodiment, the second message indicates the second frequency domain resource pool in the second BWP.

As an embodiment, the second message is used to determine an index of each PRB of the second frequency domain resource pool in the first BWP.

As an embodiment, the second message is used to determine an index of each PRB of the second frequency domain resource pool in the second BWP.

As an embodiment, the second message and the first message belong to the same RRC message.

As an embodiment, the second message and the first message belong to the same RRC IE.

As an embodiment, the second message and the first message are configured to the same BWP.

As an embodiment, the second message and the first message are configured to two different BWPs, respectively.

As an embodiment, the second message and the first message are configured to the same serving cell.

As an embodiment, the second message and the first message are configured to two different serving cells, respectively.

As an embodiment, the first message includes configuration information for the first physical layer channel and the second message includes configuration information for the second physical layer channel.

As an embodiment, the first message includes configuration information for the second physical layer channel and the second message includes configuration information for the first physical layer channel.

As an embodiment, the first message includes PDSCH-Config, the PDSCH-Config includes configuration information for the first physical layer channel; the second message includes PUSCH-Config, the PUSCH-Config includes configuration information for the second physical layer channel.

As an embodiment, the first message includes PDSCH-ConfigCommon, and the PDSCH-ConfigCommon includes configuration information for the first physical layer channel; the second message includes PUSCH-ConfigCommon, and the PUSCH-ConfigCommon includes configuration information for the second physical layer channel.

As an embodiment, the first message includes BWP-DownlinkCommon IE, and the BWP-DownlinkCommon IE includes at least one of PDSCH-ConfigCommon or PDCCH-ConfigCommon; the second message includes BWP-UplinkCommon IE, and the BWP-UplinkCommon IE includes at least one of PUSCH-ConfigCommon, PUCCH-ConfigCommon, RACH-ConfigCommon, MsgA-ConfigCommon or AdditionalRACH-ConfigList.

As an embodiment, the first message includes a BWP-Downlink IE, and the BWP-Downlink IE includes at least one of PDSCH-Config or PDCCH-Config; the second message includes BWP-Uplink IE, and the BWP-Uplink IE includes at least one of PUSCH-Config, PUCCH-Config, RACH-ConfigDedicated, ConfiguredGrantConfig, SRS-Config or BeamFailureRecoveryConfig.

As an embodiment, the second message includes PDSCH-Config, and the PDSCH-Config including configuration information of the first physical layer channel; the first message includes PUSCH-Config, and the PUSCH-Config including configuration information of the second physical layer channel.

As an embodiment, the second message includes PDSCH-ConfigCommon, and the PDSCH-ConfigCommon includes configuration information of the first physical layer channel; the first message includes PUSCH-ConfigCommon, and the PUSCH-ConfigCommon includes configuration information of the second physical layer channel.

As an embodiment, the second message includes BWP-DownlinkCommon IE, and the BWP-DownlinkCommon IE includes at least one of PDSCH-ConfigCommon or PDCCH-ConfigCommon; the first message includes BWP-UplinkCommon IE, and the BWP-UplinkCommon IE includes at least one of PUSCH-ConfigCommon, PUCCH-ConfigCommon, RACH-ConfigCommon, MsgA-ConfigCommon or AdditionalRACH-ConfigList.

As an embodiment, the second message includes a BWP-Downlink IE, and the BWP-Downlink IE includes at least one of PDSCH-Config or PDCCH-Config; the first message includes BWP-Uplink IE, and the BWP-Uplink IE includes at least one of PUSCH-Config, PUCCH-Config, RACH-ConfigDedicated, Configured-GrantConfig, SRS-Config or BeamFailureRecoveryConfig.

As an embodiment, the second frequency domain resource pool includes a frequency band.

As an embodiment, the second frequency domain resource pool includes a subband.

As an embodiment, the second frequency domain resource pool includes a frequency range.

As an embodiment, the second frequency domain resource pool includes a frequency range determined at one frequency domain location and one bandwidth.

As an embodiment, the second frequency domain resource pool includes a continuous frequency resources.

As an embodiment, the second frequency domain resource pool includes a non-continuous frequency resource.

As an embodiment, the second frequency domain resource pool comprises P2 frequency domain resource blocks, and the P2 being a positive integer.

As an embodiment, the second frequency domain resource pool comprises a P2 frequency domain resource block group, and the P2 being a positive integer.

As an embodiment, the second frequency domain resource pool includes at least one BWP.

As an embodiment, the second frequency domain resource pool is a BWP.

As an embodiment, the second frequency domain resource pool belongs to a first BWP.

As a sub-embodiment of the present embodiment, the second frequency domain resource pool is a full or part of the frequency domain resource in the first BWP.

As a sub-embodiment of the present embodiment, the number of PRBs occupied by the second frequency domain resource pool is equal to the number of PRBs occupied by the first BWP.

The number of PRBs occupied by the second frequency domain resource pool as a sub-embodiment of the present embodiment is not greater than the number of PRBs occupied by the first BWP.

As a sub-embodiment of the present embodiment, the number of PRBs occupied by the second frequency domain resource pool is less than the number of PRBs occupied by the first BWP.

As a sub-embodiment of the present embodiment, the PRB occupied by the second frequency domain resource pool in the first BWP is configurable.

As a sub-embodiment of the present embodiment, both the second frequency domain resource pool and the first frequency domain resource pool belong to the first BWP.

As a sub-embodiment of the present embodiment, the first frequency domain resource pool is the first BWP and the first frequency domain resource subset belongs to the first frequency domain resource pool.

As an embodiment, the second frequency domain resource pool belongs to a second BWP.

As a sub-embodiment of the present embodiment, the second frequency domain resource pool is a second BWP.

As a sub-embodiment of the present embodiment, the "second frequency domain resource pool" may be replaced with: Second BWP.

As a sub-embodiment of the present embodiment, the second frequency domain resource pool is a full or part of the frequency domain resource in the second BWP.

As a sub-embodiment of the present embodiment, the number of PRBs occupied by the second frequency domain resource pool is equal to the number of PRBs occupied by the second BWP.

As a sub-embodiment of the present embodiment, the number of PRBs occupied by the second frequency domain resource pool is not greater than the number of PRBs occupied by the second BWP.

As a sub-embodiment of the present embodiment, the number of PRBs occupied by the second frequency domain resource pool is less than the number of PRBs occupied by the second BWP.

As a sub-embodiment of the present embodiment, the PRB occupied by the second frequency domain resource pool in the second BWP is configurable.

As a sub-embodiment of the present embodiment, the second frequency domain resource pool is the second BWP and the first frequency domain resource pool is the first BWP.

As a sub-embodiment of the present embodiment, the second frequency domain resource pool belongs to the second BWP and the first frequency domain resource pool belongs to the first BWP.

As an embodiment, the second frequency domain resource pool and the first frequency domain resource pool are not overlapping.

As an embodiment, the second frequency domain resource pooland the first frequency domain resource pool are partially overlap.

As an embodiment, the second frequency domain resource pooland the first frequency domain resource pool are fully overlapping.

As an embodiment, the second frequency domain resource pool is configured to be transmitted down a link, and the first frequency domain resource pool is configured as an uplink transmission.

As an embodiment, the second frequency domain resource pool is configured as an uplink transmission, and the first frequency domain resource poolis configured as a downlink transmission.

As an embodiment, the second BWP is configured.

As an embodiment, the second BWP is not configured.

As an embodiment, the second BWP is a BWP.

As an embodiment, the second BWP is a UL BWP and the first BWP is a DL BWP.

As an embodiment, the second BWP is a DL BWP and the first BWP is a UL BWP.

As an embodiment, the second BWP is an SL BWP.

As an embodiment, the second BWP is an initial BWP.

As an embodiment, the second BWP is a default BWP.

As an embodiment, the second BWP is an active BWP.

As an embodiment, the second BWP is not an initial BWP.

As an embodiment, the second BWP is directed to the first cell.

As an embodiment, the second BWP is directed to the primary carrier of the first cell.

As an embodiment, the second BWP is directed to a secondary carrier of the first cell.

As an embodiment, the second BWP includes Q2 frequency domain resource blocks, and the Q2 being a positive integer.

As an embodiment, the second BWP includes Q2 frequency domain resource block group, the Q2 being a positive integer.

As an embodiment, the index of the second BWP is the same as the index of the first BWP.

As an embodiment, the index of the second BWP is different from the index of the first BWP.

As an embodiment, the bandwidth of the second BWP is not greater than the bandwidth of the first BWP.

As an embodiment, the bandwidth of the second BWP is less than the bandwidth of the first BWP.

As an embodiment, the bandwidth of the second BWP is equal to the bandwidth of the first BWP.

As an embodiment, the second BWP and the first BWP are not overlapping.

As an embodiment, the second BWP and the first BWP are partially overlapping.

As an embodiment, the second BWP and the first BWP are fully overlapping.

As an embodiment, the frequency domain location of the second BWP is the same as the frequency domain location of the first BWP, and the bandwidth of the second BWP is the same as the bandwidth of the first BWP.

As an embodiment, the frequency domain location of the second BWP is the same as the frequency domain location of the first BWP, and the bandwidth of the second BWP is different than the bandwidth of the first BWP.

As an embodiment, the frequency domain position of the second BWPis different from the frequency domain position of the first BWP, or the bandwidth of the second BWP is different from the bandwidth of the first BWP.

As an embodiment, the first BWP is configured as a downlink transmission, and the second BWP is configured as an uplink transmission.

As an embodiment, the first BWP is configured as an uplink transmission, and the second BWP is configured as a downlink transmission.

As an embodiment, the first frequency domain resource poolis used forthe first physical layer channel and the second frequency domain resource poolis used forthe second physical layer channel.

As a sub-embodiment of the present embodiment, the first message is configured to the first BWP and the second mes sage is configured to the second BWP.

As a sub-embodiment of the present embodiment, the first message is configured to the first frequency domain resource pooland the second message is configured to the second frequency domain res ource pool.

As a sub-embodiment of the present embodiment, the first frequency domain resource pool is used for uplink transmission and the second frequency domain resource pool is used for downlink transmission.

As a sub-embodiment of the present embodiment, the first frequency domain resource pool is used for uplink transmission and the second frequency domain resource pool is used for sidelink transmission.

As a sub-embodiment of the present embodiment, the first frequency domain resource pool is used for downlink transmission and the second frequency domain resource pool is used for sidelink transmission.

As a sub-embodiment of the present embodiment, the first message includes configuration information for the first physical layer channel of the first frequency domain resource pool, and the second message includes configuration information for the second physical layer channel of the second frequency domain resource pool.

As a sub-embodiment of the present embodiment, the second message includes PUSCH-Config, and the PUSCH-Config includes configuration information of the second physical layer channel; the first message includes PDSCH-Config, and the PDSCH-Config includes configuration information of the first physical layer channel.

As a sub-embodiment of the present embodiment, the second message includes PUSCH-Config-Common, and the PUSCH-ConfigCommon includes configuration information of the second physical layer channel; the first message includes PDSCH-ConfigCommon, and the PDSCH-ConfigCommon includes configuration information of the first physical layer channel.

As a sub-embodiment ofthe present embodiment, the first message includes a BWP IE and the second message includes a BWP IE.

As a sub-embodiment of the present embodiment, the first message includes BWP-DownlinkCommon IE, and the BWP-DownlinkCommon IE includes at least one of PDSCH-ConfigCommon or PDCCH-ConfigCommon; the second message includes BWP-UplinkCommon IE, and the BWP-UplinkCommon IE includes at least one of PUSCH-ConfigCommon, PUCCH-ConfigCommon, RACH-ConfigCommon, MsgA-ConfigCommon or AdditionalRACH-ConfigList.

As a sub-embodiment ofthe present embodiment, the first message includes BWP-Downlink IE, and the BWP-Downlink IE includes at least one ofPDSCH-Config or PDCCH-Config; the second message includes BWP-Uplink IE, and the BWP-Uplink IE includes at least one of PUSCH-Config, PUCCH-Config, RACH-ConfigDedicated, ConfiguredGrantConfig, SRS-Config or BeamFailureRecoveryConfig.

As an embodiment, the frequency domain resource occupied by the first physicallayer channel belongs to the first frequency domain resource pool, and the frequency domain resource occupied by the second physical layer channel belongs to the second frequency domain resource pool.

As an embodiment, the overlapping portion of the frequency domain resources indicated by the first domain of the first DCI and the second frequency domain resource poolis used to determine the frequency domain resource occupied by the second physical layer channel.

As a sub-embodiment of the present embodiment, the overlapping portion of the frequency domain resources indicated by the first domain of the first DCI and the second frequency domain resource pool is the frequency domain resource occupied by the second physical layer channel.

As a sub-embodiment of the present embodiment, the frequency domain resources occupied by the second physical layer channel belong to the overlapping portion of the frequency domain resources indicated by the first domain of the first DCI and the second frequency domain resource pool.

As a sub-embodiment of the present embodiment, the frequency domain resources occupied by the second physical layer channel include all the frequency domain resources in the overlapping portion between the frequency domain resources indicated by the first domain of the first DCI and the second frequency domain resource pool.

As a sub-embodiment of the present embodiment, the frequency domain resources occupied by the second physical layer channel include part of the frequency domain resources in the overlapping portion between the frequency domain resources indicated by the first domain ofthe first DCI and the second frequency domain resource pool.

As an embodiment, the indication of the first domain of the first DCI depends on the first message.

As an embodiment, the indication of the first domain of the first DCI depends on the first BWP.

As an embodiment, the indication of the first domain of the first DCI does not depends on the secondBWP.

As an embodiment, the indication of the first domain of the first DCI is independent ofthe se cond BWP.

As an embodiment, the first domain of the first DCI is interpreted according to the first message.

As an embodiment, the first domain of the first DCI is interpreted according to a configuration ofthe first BWP.

As an embodiment, the first domain of the first DCI is interpreted according to a configuration ofthe first BWP only.

As an embodiment, the first node U01 determines the frequency domain resources indicated by the first domain of the first DCI based on the first message.

As an embodiment, the first node U01 determines the frequency domain resources indicated by the first domain of the first DCI based on the configuration of the first BWP.

As an embodiment, the first DCI is used to determine performing wireless reception on the first physical layer channel and performing wireless transmission on the second physical layer channel.

**Embodiment 7**

Embodiment 7 exemplifies a schematic diagram in which the first DCI includes a second domain according to an embodiment of the present application, as shown in FIG. 7.

In Embodiment 7, the first DCI includes a second domain, and the second domain of the first DCI being used to determine the time domain resource occupied by the first physical layer channel and the time domain resource occupied by the second physical layer channel.

As an embodiment, the first and second domains of the first DCI are used to determine a time frequency resource for the first physical channel and a time frequency resource for the second physical channel.

As an embodiment, the second domain of the first DCI is the Time Domain Resource Assignment (TDRA) domain.

As an embodiment, the second domain of the first DCI is the Time domain resource assignment domain.

As an embodiment, the load size of the second domain of the first DCI is equal to positive integer bits.

As an embodiment, the load size of the second domain of the first DCI is variable.

As an embodiment, the load size of the second domain of the first DCI is fixed.

As an embodiment, the load size of the second domain of the first DCI refers to the number of bits occupied by the second domain of the first DCI.

As an embodiment, the load size of the second domain of the first DCI is 4 bits.

As an embodiment, the load of the second domain of the first DCI occupies positive integerbits.

As an embodiment, the positive integer bits occupied by the load of the second domain of the first DCI are continuous.

As an embodiment, no bit other than the second domain is present between any two bits of the positive integer bit occupied by the load of the second domain of the first DCI.

As an embodiment, the second domain of the first DCI is used for time domain resource allocation.

As a sub-embodiment of the present embodiment, the second domain of the first DCI is used to determine a time domain resource.

As a sub-embodiment of the present embodiment, the time domain resource allocation includes the location of the time domain resource.

As a sub-embodiment of the present embodiment, the time domain resource allocation includes the length of the time domain resource.

As a sub-embodiment of the present embodiment, the time domain resource allocation includes the start and end time of the time domain resource.

As a sub-embodiment of the present embodiment, the time domain resource allocation includes the start time and end time of the time domain resource.

As an embodiment, the time domain resource indicated by the second domain of the first DCI includes a continuous time resource.

As an embodiment, the time domain resource indicated by the second domain of the first DCI includes a non-continuous time resource.

As an embodiment, the time domain resource indicated by the second domain of the first DCI includes a positive integer time slot.

As an embodiment, the time domain resource indicated by the second domain of the first DCI includes a positive integer symbol.

As an embodiment, the second domain of the first DCI is an index.

As an embodiment, the time domain resource indicated by the second domain of the first DCI is determined according to section 5.1.2.1 of 3GPP TS38.214;

the second domain of the first DCI is the m-value (value) in section 5.1.2.1 of 3GPP TS38.214.

As an embodiment, the first node determines the time domain resource occupied by the first physical layer channel and the time domain resource occupied by the second physical layer channel according to the second domain of the first DCI.

As an embodiment, the second domain of the first DCI indicates a time domain resource allocation for the first physicallayer channel and a time domain resource allocation for the second physicallayer channel.

As an embodiment, the second domain of the first DCI is used to determine the time domain resource occupied by the first physical layer channel, and the second domain of the first DCI is used to determine the time domain resource occupied by the second physical layer channel.

As an embodiment, the second domain of at least the first DCI is used to determine the time domain resource occupied by the first physical layer channel and the time domain resource occupied by the second physical layer channel.

As an embodiment, the time domain resource indicated by the second domain of the first DCI is used for the first and second physical layer channels.

As an embodiment, the time domain resources occupied by the first physical layer channel include all time domain resources indicated by the second domain of the first DCI, and the time domain resources occupied by the second physical layer channel include all time domain resources indicated by the second domain of the first DCI.

As an embodiment, the time domain resource occupied by the first physical layer channel includes all time domain resources indicated by the second domain of the first DCI, and the time domain resource occupied by th e second physical layer channel includes a portion of the time domain resources indicated by the second domain of the first DCI.

As an embodiment, the time domain resource occupied by the first physical layer channel includes a portion of the time domain resource indicated by the second domain ofthe first DCI, and the time domain resource occupied by the second physical layer channel includes all the time domain resources indicated by the second domain of the first DCI.

As an embodiment, the time domain resource occupied by the first physical layer channel includes a portion of the time domain resource indicated by the second domain ofthe first DCI, and the time domain resource occupied by the second physical layer channel includes a portion ofthe time domain resource indicated by the second domain of the first DCI.

As an embodiment, the second domain and the first time ofthe first DCI are used to determine the time domain resource occupied by the first physical layer channel and the time domain resource occupied by the second physical layer channel.

As a sub-embodiment of the present embodiment, the time domain resources indicated by the second domain of the first DCI that are before the first time are the time domain resources occupied by the first physical layer channel; the time domain resources indicated by the second domain of the first DCI that are after the first time are the time domain resources occupied by the second physical layer channel.

As a sub-embodiment of the present embodiment, the time domain resource indicated by the second domain of the first DCI is the time domain resource occupied by the second physical layer channel before the first time; the time domain resource indicated by the second domain of the first DCI is the time domain resource occupied by the first physical layer channel after the first time.

As a sub-embodiment of the present embodiment, the first time is one of the time domain resources indicated by the second domain of the first DCI.

As a sub-embodiment of the present embodiment, the first time is the switching point of the uplink transmission time interval and the downlink transmission time interval.

As a sub-embodiment of the present embodiment, the first time is an uplink-downlink switching point.

As a sub-embodiment of the present embodiment, the first time is a switching point of the first BWP and the second BWP.

As a sub-embodiment of the present embodiment, the first time is preconfigured.

As a sub-embodiment of the present embodiment, the first time is dynamically configured.

As a sub-embodiment of the present embodiment, the first time is a time between two time slots.

As a sub-embodiment of the present embodiment, the first time is a time between two symbols.

As a sub-embodiment of the present embodiment, the first time is an uplink time slot, and the first time is a downlink time slot.

As a sub-embodiment of the present embodiment, the first time is a downlink time slot, and the first time is an uplink time slot.

As an embodiment, the second domain and the first parameter of the first DCI are used to determine the time domain resource occupied by the first physical layer channel and the time domain resource occupied by the second physical layer channel.

As a sub-embodiment of the present embodiment, the first parameter is a numeric value greater than 0 and less than 1.

As a sub-embodiment of the present embodiment, the first parameter is used to determine the length of time domain resources occupied by the first physical layer channel and the length of time domain resources occupied by the second physical layer channel.

As a sub-embodiment of the present embodiment, the length of the time domain resources occupied by the first physical layer channel and the second domain of the first DCI are equal to the product of the first parameter; the length of the time domain resources occupied by the second physical layer channel and the product of the second domain of the first DCI are equal to the product of (1 minus the first parameter).

As a sub-embodiment of the present embodiment, the length of the time domain resources occupied by the second physical layer channel and the second domain of the first DCI are equal to the product of the first parameter; the length of the time domain resources occupied by the first physical layer channel are equal to the product of the second domain resources indicated by the first DCI (1 minus the first parameter).

As a sub-embodiment of the present embodiment, the first time is the time obtained by adding a first time interval to the start time of the time domain resources indicated by the second domain of the first DCI.

As a sub-embodiment of the present embodiment, the first time interval is the duration of the time domain resources occupied by the first physical layer channel.

As a sub-embodiment of the present embodiment, the first time interval is the duration of the time domain resources occupied by the second physical layer channel.

As an embodiment, the first message is used to determine that the second domain of the first DCI is used to determine the time domain resource occupied by the first physical layer channel and the time domain resource occupied by the second physical layer channel.

As an embodiment, the second domain of the first DCI is used to determine the time domain resource occupied by the first physical layer channel and the time domain resource occupied by the second physical layer channel only when indicated explicitly or implicitly by the first message.

As an embodiment, the indication of the second domain of the first DCI depends on the first message.

As an embodiment, the second domain of the first DCI is interpreted according to the first message.

As an embodiment, the first node determines a time domain resource indicated by the second domain of the first DCI according to the first message.

**Embodiment 8**

Embodiment 8 exemplifies a schematic diagram of a first frequency domain resource pool according to one embodiment of the present application; as shown in FIG. 8. In FIG. 8, the longitudinal axis represents the frequency; in FIG. 8, the longitudinal axis represents the frequency.

As an embodiment, in the FIG. (8a), solid line box 801(a) represents the first frequency domain resource pool.

As an embodiment, in the FIG. (8b), solid line box 801(b) represents the first frequency domain resource pool; the slashed portion in solid line box 801(b) represents the first frequency domain resource subset.

As an embodiment, in the FIG. (8a), the frequency domain resource occupied by the first physical layer channel belongs to the first frequency domain resource pool, and the frequency domain resource occupied by the second physicallayer channel belongs to the first frequency domain resource pool.

As an embodiment, in the FIG. (8b), the frequency domain resources occupied by the first physical layer channel belong to the first frequency domain resource pool, and the frequency domain resources occupied by the second physical layer channel belong to the first frequency domain resource subset.

As an embodiment, in the FIG. (8b), the frequency domain resources occupied by the first physical layer channel belong to the first frequency domain resource subset, and the frequency domain resources occupied by the second physical layer channel belong to the first frequency domain resource pool.

As an embodiment, in FIG. (8b), the first frequency domain resource subset belongs to the first frequency domain resource pool.

As an embodiment, the FIG. 8 does not limit the location and size of the frequency domain resources of the first frequency domain resource pool in the present application.

As an embodiment, the FIG. 8 does not limit the location and size of the frequency domain resources of the first subset ofthe frequency domain resources in the present application.

As an embodiment, the FIG. 8 does not limit whether the frequency domain resources of the first frequency domain resource subsetin the present application are continuous.

As an embodiment, the FIG. 8 does not limit whether the frequency domain resources of the first frequency domain resource pool in the present application are continuous.

**Embodiment 9**

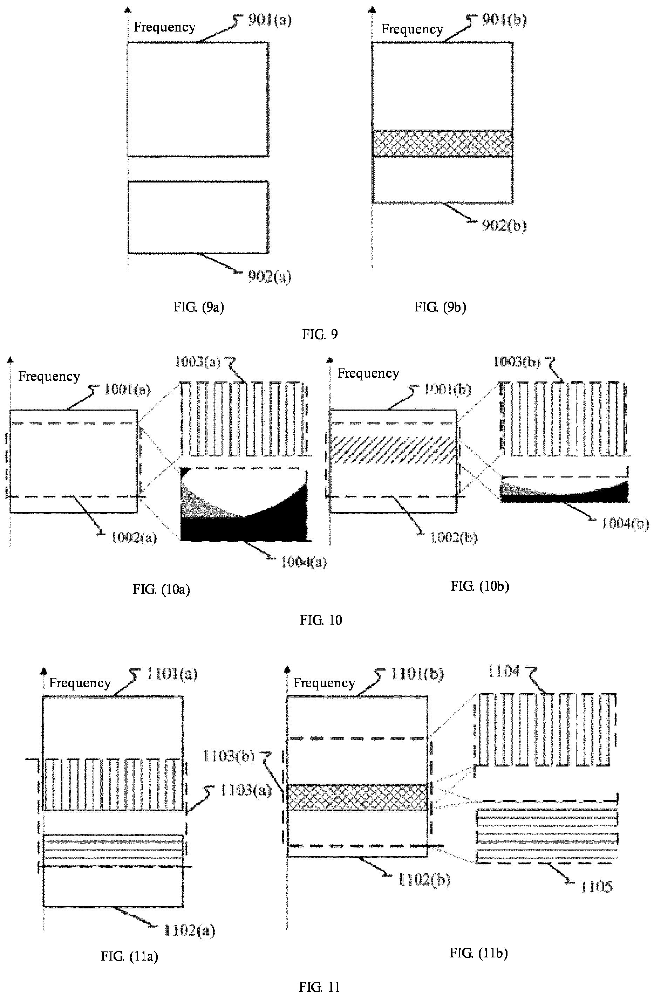

Embodiment 9 exemplifies a schematic diagram of a first and a second frequency domain resource pool according to one embodiment of the present application, as shown in FIG. 9. In the FIG. 9, the longitudinal axis represents frequency.

As an embodiment, in FIG. (9a), solid line box 901(a) represents the first frequency domain resource pooland solid line box 902(a) represents the second frequency domain resource pool; there is no overlap between the first and second frequency domain resource pools.

As an embodiment, in FIG. (9b), solid line box901(b) represents the first frequency domain resource pool, and solid line box 902(b) represents the second frequency domain resource pool; there is an overlap between the first and second frequency domain resource pools; a diamond-filled portion represents the overlapping portion between the first and second frequency domain resource pools.

As an embodiment, FIG. 9 does not limit the location and size of the frequency domain resources of the first frequency domain resource pool in the present application.

As an embodiment, FIG. 9 does not limit the location and size of the frequency domain resources ofthe second frequency domain resource pool in the present application.

As an embodiment, FIG. 9 does not limit whether the frequency domain resources ofthe first frequency domain resource poolin the present application are continuous.

As an embodiment, FIG. 9 does not limit whether the frequency domain resources of the second frequency domain resource pool in the present application are continuous.

**Embodiment 10**

Embodiment 10 exemplifies a schematic diagram of the frequency domain resources occupied by the first and second physical layer channels according to one embodiment of the present application, as shown in FIG. 10. In FIG. 10, the longitudinal axis represents frequency.

As an embodiment, in FIG. (10a), solid line box 1001(a) represents the first frequency domain resource pool and dashed line box 1002(a) represents the frequency domain resource indicated by the first domain of the first DCI.

As a sub-embodiment ofthe present embodiment, the dashed line box 1003(a) represents the frequency domain resource occupied by the first physicallayer channel.

As a sub-embodiment ofthe present embodiment, the dashed line box 1004(a) represents the frequency domain resource occupied by the second physical layer channel.

As a sub-embodiment of the present embodiment, the dashed line box 1003(a) is an overlapping portion between the solid line box 1001(a) and the dashed line box 1002(a).

As a sub-embodiment of the present embodiment, the dashed line box 1004(a) is an overlapping portion between the solid line box 1001(a) and the dashed line box 1002(a).

As an embodiment, in FIG. (10b), solid line box 1001(b) represents the first frequency domain resource pool, a slashed portion in solid line box 1001(b) represents the first frequency domain resource subset, and dashed line box 1002(b) represents the frequency domain resource indicated by the first domain of the first DCI.

As a sub-embodiment ofthe present embodiment, the dashed line box1003(b) represents the frequency domain resources occupied by the first physical layer channel and the dashed line box 1004(b) represents the frequency domain resources occupied by the second physical layer channel.

As a sub-embodiment ofthe present embodiment, the dashed line box1003(b) represents the frequency domain resource occupied by the second physicallayer channel and the dashed line box 1004(b) represents the frequency domain resource occupied by the first physical layer channel.

As a sub-embodiment of the present embodiment, the dashed line box 1003(b) is an overlapping portion between the solid line box 1001(b) and the dashed line box 1002(b).

As a sub-embodiment of the present embodiment, the dashed line box 1004(b) is an overlapping portion between the slashed portions in the solid line box 1002(b) and the solid line box 1001(b).

As an embodiment, FIG. 10 do not limit the location and size of the frequency domain resources of the first frequency domain resource pool in the present application.

As an embodiment, FIG. 10 do not limit the location and size of the frequency domain resources of the first subset ofthe frequency domain resources in the present application.

As an embodiment, FIG. 10 do not limit whether the frequency domain resources ofthe first frequency domain resource subset in the present application are continuous.

As an embodiment, FIG. 10 do not limit whether the frequency domain resources ofthe first frequency domain resource pool in the present application are continuous.

As an embodiment, FIG. 10 do not limit the location and size of the frequency domain resources indicated by the first domain of the first DCI in the present application.

**Embodiment 11**

Embodiment 11 exemplifies a schematic diagram of the frequency domain resources occupied by the first and second physical layer channels according to another embodiment of the present application, as shown in FIG. 11. In FIG. 11, the longitudinal axis represents frequency.

As an embodiment, in FIG. (11a), solid line box 1101(a) represents the first frequency domain resource pool, solid line box 1102(a) represents the second frequency domain resource pool, and dashed line box 1103(a) represents the frequency domain resource indicated by the first domain of the first DCI; there is no overlap between the first and second frequency domain resource pools.

As a sub-embodiment of the present embodiment, the box filled by the vertical line represents the frequency domain resource occupied by the first physical layer channel; the box filled by the horizontal line represents the frequency domain resource occupied by the second physical layer channel.

As a sub-embodiment of the present embodiment, the box filled by the vertical line represents the frequency domain resource occupied by the second physical layer channel; the box filled by the horizontal line represents the frequency domain resource occupied by the first physical layer channel.

As a sub-embodiment of the present embodiment, the box filled by the vertical lines is an overlapping portion between the solid line box 1101(a) and the dashed line box 1103(a).

As a sub-embodiment of the present embodiment, the box filled with the horizontal line is an overlapping portion between the solid line box 1102(a) and the dashed line box 1103(a).

As an embodiment, in FIG. (11b), solid line box 1101(b) represents the first frequency domain resource pool, solid line box 1102(b) represents the second frequency domain resource pool, and dashed line box 1103(b) represents the frequency domain resource indicated by the first domain of the first DCI; there is an overlap between the first and second frequency domain resource pools.

As a sub-embodiment of the present embodiment, the box filled by the vertical line represents the frequency domain resource occupied by the first physical layer channel; the box filled by the horizontal line represents the frequency domain resource occupied by the second physical layer channel.

As a sub-embodiment of the present embodiment, the box filled by the vertical line represents the frequency domain resource occupied by the second physical layer channel; the box filled by the horizontal line represents the frequency domain resource occupied by the first physical layer channel.

As a sub-embodiment of the present embodiment, the diamond-filled box is an overlapping portion between the solid line box 1101(b) and the solid line box 1102(b).

As a sub-embodiment of the present embodiment, the box filled by the vertical lines is all or part of the overlapping portion between the solid line box 1101(b) and the dashed line box 1103(b).

As a sub-embodiment of the present embodiment, the box filled with the horizontal line is all or part of the overlapping portion between the solid line box 1102(b) and the dashed line box 1103(b).

As a sub-embodiment of the present embodiment, the box filled by the vertical lines is the overlapping portion between the solid line box 1101(b) and the dashed line box 1103(b); the box filled by the horizontal lines is the overlapping portion between the solid line box 1102(b) and the dashed line box 1103(b).

As a sub-embodiment of the present embodiment, the box filled by the vertical lines is the overlapping portion between the solid line box 1101(b) and the dashed line box 1103(b); the box filled by the horizontal lines is a portion outside the overlapping portion between the solid line box 1101(b) and the solid line box 1102(b) in the overlapping portion between the solid line box 1102(b) and the dashed line box 1103(b).

As a sub-embodiment of the present embodiment, the box filled by the vertical lines is a portion that outside the overlapping portion between the solid line box 1101(b) and the solid line box 1102(b) in the overlapping portion between the solid line box 1101(b) and the dashed line box 1103(b); the box filled by the horizontal lines is an overlapping portion between the solid line box 1102(b) and the dashed line box 1103(b).

As a sub-embodiment of the present embodiment, the box filled by the vertical lines is a portion that outside the overlapping portion between the solid line box 1101(b) and the dashed line box 1102(b) in the overlapping portion between the solid line box 1101(b) and the dashed line box 1103(b); the box filled by the horizontal lines is a portion that outside the overlapping portion between the solid line box 1101(b) and the dashed line box 1102(b) in the overlapping portion between the solid line box 1102(b) and the dashed line box 1103(b).

As an embodiment, FIG. 11 do not limit the location and size of the frequency domain resources of the first frequency domain resource pool in the present application.

As an embodiment, FIG. 11 do not limit the location and size of the frequency domain resources ofthe second frequency domain resource pool in the present application.

As an embodiment, FIG. 11 do not limit whether the frequency domain resources ofthe first frequency domain resource poolin the present application are continuous.

As an embodiment, FIG. 11 do not limit whether the frequency domain resources of the second frequency domain resource poolin the present application are continuous.

As an embodiment, FIG. 11 do not limit the location and size of the frequency domain resources indicated by the first domain of the first DCI in the present application.

**Embodiment 12**

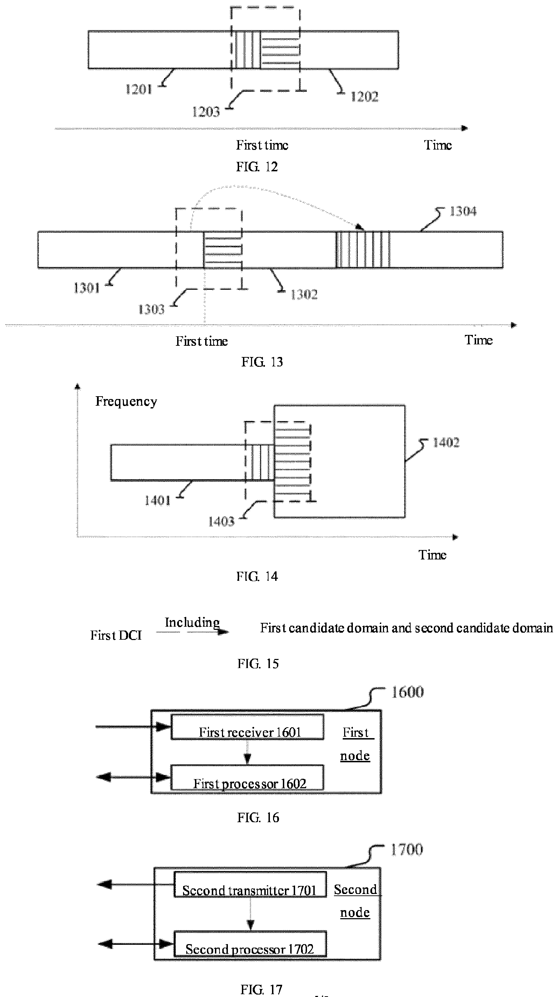

Embodiment 12 exemplifies a schematic diagram of time domain resources occupied by a first and second physical layer channel according to one embodiment of the present application, as shown in FIG. 12. In FIG. 12, the horizontal axis represents time.

As an embodiment, solid line box 1201 represents the uplink transmission time interval; solid line box 1202 represents the downlink transmission time interval; and dashed line box 1203 represents the time domain resource indicated by the second domain of the first DCI.

As an embodiment, solid line box 1201 represents the down-transmission interval; solid line box 1202 represents the up-transmission interval; and dashed line box 1203 represents the time domain resource indicated by the second domain of the first DCI.

As an embodiment, the overlapping portion between the dashed line box 1203 and the solid line box 1201 are time domain resources occupied by the first physicallayer channel; the overlapping portion between the dashed line box 1203 and the solid line box 1202 are time domain resources occupied by the second physical layer channel.

As an embodiment, the overlapping portion between the dashed line box 1203 and the solid line box 1201 are time domain resources occupied by the second physical layer channel; the overlapping portion between the dashed line box 1203 and the solid line box 1202 are time domain resources occupied by the first physical layer channel.

As an embodiment, FIG. 12 do not limit the location and length of time domain resources used for uplink transmission in the present application.

As an embodiment, FIG. 12 do not limit the location and length of time domain resources used for downlink transmission in the present application.

As an embodiment, FIG. 12 do not limit the location and length of the time domain resources indicated by the second domain of the first DCI in the present application.

**Embodiment 13**

Embodiment 13 exemplifies a schematic diagram of time domain resources occupied by the first and second physicallayer channels according to another embodiment of the present application, as shown in FIG. 13. In FIG. 13, the horizontal axis represents time.

As an embodiment, the dashed line box 1303 represents a time domain resource indicated by the second domain of the first DCI.

As an embodiment, solid line box 1301 represents the uplink transmission time interval; solid line box 1302 represents the downlink transmission time interval; solid line box 1304 represents the uplink transmission time interval.

As an embodiment, solid line box 1301 represents the downlink transmission time interval; solid line box 1302 represents the uplinktransmission time interval; and solid line box 1304 represents the downlink transmission time interval.

As an embodiment, the overlapping portion between the dashed line box 1303 and the solid line box 1302 represent time domain resources occupied by the second physical layer channel; the vertically filled portions ofthe solid line box 1304 represent time domain resources occupied by the first physicallayer channel.

As an embodiment, the overlapping portion between the dashed line box 1303 and the solid line box 1302 represent time domain resources occupied by the first physical layer channel; the vertically filled portions of the solid line box 1304 represent time domain resources occupied by the second physical layer channel.

As an embodiment, the uplink transmission time interval represented by solid line box 1304 is an uplink transmission time interval after the uplink transmission time interval represented by solid line box 1301.

As an embodiment, there is at least one uplink transmission time interval between the solid line box 1304 and the solid line box 1301.

As an embodiment, there is no uplink transmission time interval between the solid line box 1304 and the solid line box 1301.

As an embodiment, FIG. 13 do not limit the location and length of time domain resources used for uplink transmission in the present application.

As an embodiment, FIG. 13 do not limit the location and length of time domain resources used for downlink transmission in the present application.

As an embodiment, FIG. 13 do not limit the location and length of the time domain resource indicated by the second domain of the first DCI in the present application.

**Embodiment 14**

Embodiment 14 exemplifies a schematic diagram of time and frequency domain resources occupied by the first and second physical layer channels according to one embodiment of the present application, as shown in FIG. 14. In FIG. 14, the horizontal axis represents time and the vertical axis represents frequency.

As an embodiment, solid line box 1401 represents time frequency resources used for uplink transmission and solid line box 1402 represents time frequency resources used for downlink transmission.

As an embodiment, solid line box 1401 represents time frequency resources used for downlink transmission and solid line box 1402 represents time frequency resources used foruplink transmission.

As an embodiment, the time frequency resources include time domain resources and frequency domain resources.

As an embodiment, the dashed line box 1403 represents a frequency domain resource indicated by the first domain of the first DCI and a time domain resource indicated by the second domain of the first DCI.

As an embodiment, the box filled by the vertical line represents the frequency domain resource occupied by the first physical layer channel; the box filled by the horizontal line represents the frequency domain resource occupied by the second physical layer channel.

As an embodiment, the box filled by the vertical line represents the frequency domain resource occupied by the second physical layer channel; the box filled by the horizontal line represents the frequency domain resource occupied by the first physical layer channel.

As an embodiment, the box filled by the vertical lines are the overlapping portion between the solid line box 1401 and dashed line box 1403.

As an embodiment, the box filled by the horizontal lines is the overlapping portion between the solid line box 1402 and the dashed line box 1403.

As an embodiment, FIG. 14 do not limit the location and length of time domain res ources and the location and size of frequency domain resources used foruplink transmission in the present application.

As an embodiment, FIG. 14 do not limit the location and length of time domain resources and the location and size of frequency domain resources used for downlink transmission in the present application.

As an embodiment, FIG. 14 do not limit the location and size of the frequency domain resources indicated by the first domain of the first DCI in the present application.

As an embodiment, FIG. 14 do not limit the location and length of the time domain resources indicated by the second domain of the first DCI in the present application.

**Embodiment 15**

Embodiment 15 exemplifies a schematic diagram of a first DCI comprising a first candidate domain and a second candidate domain according to one embodiment of the present application.

In embodiment 15, the first DCI comprises a first candidate domain and a second candidate domain; the first candidate domain indicates at least one MCS, NDI, RV or HARQ Process Number for the first physical layer channel the second candidate domain indicates at least one MCS, NDI, RV or HARQ Process Number for the second physicallayer channel.

As an embodiment, the first candidate domain and the second candidate domain have the same name.

As an embodiment, both the first candidate domain and the second candidate domain include a Modulation and coding scheme in their names.

As an embodiment, both the first candidate domain and the second candidate domain include a New data indicator in their names.

As an embodiment, both the first candidate domain and the second candidate domain include a Redundancy version in their names.

As an embodiment, both the first candidate domain and the second candidate domain include a HARQ process number in their names.

As an embodiment, the first candidate domain is a Modulation and coding scheme domain, the first candidate domain indicates the MCS for the first physical layer channel.

As an embodiment, the first candidate domain is a New data indicator domain, the first candidate domain indicates the NDI for the first physicallayer channel.

As an embodiment, the first candidate domain is a Redundancy version domain, the first candidate domain indicates the RV for the first physical layer channel.

As an embodiment, the first candidate domain is a HARQ process number domain, the first candidate domain indicates a HARQ Process Number for the first physicallayer channel.

As an embodiment, the second candidate domain is a Modulation and coding scheme domain, the second candidate domain indicates the MCS for the second physical layer channel.

As an embodiment, the second candidate domain is a New data indicator domain, the second candidate domain indicates the NDI for the second physicallayer channel.

As an embodiment, the second candidate domain is a Redundancy version domain, the second candidate domain indicates the RV for the second physicallayer channel.

As an embodiment, the second candidate domain is a HARQ process number domain, the sec ond candidate domain indicates the HARQ Process Number for the second physicallayer channel.

As an embodiment, the first candidate domain is before the second candidate domain; the first candidate channelis PDSCH and the second candidate channelis PUSCH.

As an embodiment, the first candidate domain is before the second candidate domain; the first candidate channel is PUSCH and the second candidate channelis PDSCH.

As an embodiment, at least one domain exists in the Modulation and coding scheme domain, New data indicator domain, Redundancy version domain, and HARQ process number domain of the first DCI, and the number of each domain of at least one domain is greater than 1.

As an embodiment, the first DCI includes at least one candidate domain indicating at least one MCS, NDI, RV or HARQ Process Number for the first timed resource sub-block; the first candidate domain is one of at least one candidate domains.

As a sub-embodiment of the present embodiment, at least one candidate domain comprises at least one of the Modulation and coding scheme domain, the New data indicator domain, the Redundancy version domain or the HARQ Process Number domain.

As an embodiment, the first DCI includes at least one candidate domain indicating at least one MCS, NDI, RV or HARQ Process Number for the second timed resource sub-block; the second candidate domain is one of at least one candidate domains.

As a sub-embodiment of the present embodiment, at least one candidate domain comprises at least one of the Modulation and coding scheme domain, the New data indicator domain, the Redundancy version domain or the HARQ Process Number domain.

As an embodiment, at least one candidate domain used to indicate at least one of an MCS, NDI, RV or HARQ Process Number for the first time frequency resource sub-block is before being used to indicate at least one candidate domain used to indicate at least one MCS, RDI, RV or HARQ Process Number for the second time frequency resource sub-block; the first candidate channelis PDSCH and the second candidate channelis PUSCH.

As an embodiment, at least one candidate domain used to indicate at least one MCS, NDI, RV or HARQ Process Number for the first time frequency resource sub-block is before being used to indicate at least one candidate domain used to indicate at least one MCS, RDI, RV or HARQ Process Number for the second time frequency resource sub-block; the first candidate channelis PUSCH and the second candidate channelis PDSCH.

**Embodiment 16**

Embodiment 16 illustrates a structural block diagram of a processing device for use in a first node according to one embodiment of the present application, as shown in FIG. 16. In FIG. 16, the processing device 1600 in the first node includes a first receiver 1601 and a first transmitter 1602.

> a first receiver 1601, receiving a first DCI, the first DCI comprising a first domain;
> a first processor 1602, performing wireless reception on a first physical layer channel and wireless transmission on a second physical layer channel;

In Embodiment 16, the first domain of the first DCI is used to determine the frequency domain resource occupied by the first physical layer channel and the frequency domain resource occupied by the second physical layer channel.

As an embodiment, the first DCI includes a second domain, the second domain of the first DCI being used to determine the time domain resource occupied by the first physical layer channel and the time domain resource occupied by the second physical layer channel.

As an embodiment, the first DCI includes a first candidate domain and a second candidate domain; the first candidate domain indicates at least one MCS, NDI, RV or HARQ Process Number for the first physical layer channel; the second candidate domain indicates at least one MCS, NDI, RV or HARQ Process Number for the second physicallayer channel.

As an embodiment, the first receiver 1601 receiving a first message that is used to determine a load size of the first domain of the first DCI.

As an embodiment, the first message is used to determine a first frequency domain resource pool; at least one of the frequency domain resources occupied by the first physical layer channel or the frequency domain resources occupied by the second physical layer channel belongs to the first frequency domain resource pool.

As an embodiment, the first receiver 1601 receives a second message for determining a second frequency domain resource pool; wherein the frequency domain resource occupied by the first physical layer channel belongs to the first frequency domain resource pool; and the frequency domain resource occupied by the second physical layer channel belongs to the second frequency domain resource pool.

As an embodiment, the first message is used to determine a first frequency domain resource subset, and the first frequency domain resource subset belongs to the first frequency domain resource pool; the frequency domain resource occupied by the first physicallayer channel belongs to the first frequency domain resource pool, and the frequency domain resource occupied by the second physical layer channel belongs to the first frequency domain resource subset; or, the frequency domain resource occupied by the first physicallayer channel belongs to the first frequency domain resource subset, and the frequency domain resource occupied by the second physical layer channel belongs to the first frequency domain resource pool.

As an embodiment, the first receiver 1601 includes the antenna 452, a receiver454, the multi-antenna receiving processor458, the receiving processor456, the controller/processor459, the memory 460, and the data source 467 in FIG. 4 of the present application.

As an embodiment, the first receiver 1601 includes the antenna 452, a receiver454, the multi-antenna receiving processor458, and the receiving processor 456 in the FIG. 4 of the present application.

As an embodiment, the first receiver 1601 includes the antenna 452, a receiver 454, and the receiving processor 456 in the FIG. 4 of the present application.

As an embodiment, the first processor 1602 includes the antenna 452, a receiver 454, the multi-antenna receiving processor 458, the receiving processor 456, the controller/processor 459, the memory 460, and the data source 467 in FIG. 4 of the present application.

As an embodiment, the first processor 1602 includes the antenna 452, a receiver 454, the multi-antenna receiving processor458, and the receiving processor456 in FIG. 4 of the present application.

As an embodiment, the first processor 1602 includes the antenna 452, a receiver 454, the receiving processor 456 in FIG. 4 of the present application.

As an embodiment, the first processor 1602 includes the antenna 452, a transmitter 454, the multi-antenna transmitting processor457, the transmitting processor468, the controller/processor459, the memory 460, and the data source 467 in FIG. 4 of the present application.

As an embodiment, the first processor 1602 includes the antenna 452, a transmitter 454, the multi-antenna transmitting processor457, and the transmitting processor468 in FIG. 4 of the present application.

As an embodiment, the first processor 1602 includes the antenna 452 in the drawing 4 of the present application, a transmitter 454, and the transmitting processor 468.

## Embodiment 17

Embodiment 17 exemplifies a structural block diagram of a processing device for use in a second node according to an embodiment of the present application, as shown in FIG. 17. In FIG. 17, the processing device 1700 in the second node includes a second transmitter 1701 and a second receiver 1702.

> a second transmitter 1701, sending a first DCI, and the first DCI comprising a first domain;
> a second processor 1702 performing wireless transmission on a first physical layer channel and wireless reception on a second physical layer channel;

In Embodiment 17, the first domain of the first DCI is used to determine the frequency domain resource occupied by the first physical layer channel and the frequency domain resource occupied by the second physical layer channel.

As an embodiment, the first DCI includes a second domain, the second domain of the first DCI being used to determine the time domain resource occupied by the first physical layer channel and the time domain resource occupied by the second physical layer channel.

As an embodiment, the first DCI includes a first candidate domain and a second candidate domain; the first candidate domain indicates at least one MCS, NDI, RV or HARQ Process Number for the first physical layer channel; the second candidate domain indicates at least one MCS, NDI, RV or HARQ Process Number for the second physicallayer channel.

As an embodiment, the second transmitter 1701 sends a first message, and the first message is used to determine a load size of the first domain of the first DCI.

As an embodiment, the first message is used to determine a first frequency domain resource pool; at least one of the frequency domain resources occupied by the first physical layer channel or the frequency domain resources occupied by the second physical layer channel belongs to the first frequency domain resource pool.

As an embodiment, the second transmitter 1701 sends a second message, and the second message is used for determining a second frequency domain resource pool; wherein the frequency domain resource occupied by the first physical layer channel belongs to the first frequency domain resource pool; the frequency domain resource occupied by the second physical layer channel belongs to the second frequency domain resource pool.

As an embodiment, the first message is used to determine a first frequency domain resource subset, and the first frequency domain resource subset belongs to the first frequency domain resource pool; the frequency domain resource occupied by the first physical layer channel belongs to the first frequency domain resource pool, and the frequency domain resource occupied by the second physical layer channel belongs to the first frequency domain resource subset; or, the frequency domain resource occupied by the first physical layer channel belongs to the first frequency domain resource subset, and the frequency domain resource occupied by the second physical layer channel belongs to the first frequency domain resource pool.

As an embodiment, the second transmitter 1701 includes the antenna 420, the transmitter 418, the multi-antenna transmitting processor 471, the transmitting processor 416, the controller/processor 475, and the memory 476 in FIG. 4 of the present application.

As an embodiment, the second transmitter 1701 includes the antenna 420, the transmitter 418, the multi-antenna transmitting processor471 and the transmitting processor416 in FIG. 4 of the present application.

As an embodiment, the second transmitter 1701 includes the antenna 420, the transmitter 418, and the transmitting processor416 in FIG. 4 of the present application.

As an embodiment, the second processor 1702 includes the antenna 420, the transmitter 418, the multi-antenna transmitting processor 471, the transmitting processor 416, the controller/processor 475, and the memory 476 in FIG. 4 of the present application.

As an embodiment, the second processor 1702 includes the antenna 420, the transmitter 418, the multi-antenna transmitting processor471 and the transmitting processor416 in FIG. 4 of the present application.

As an embodiment, the second processor 1702 includes the antenna 420, the transmitter 418, and the transmitting processor416 in FIG. 4 of the present application.

As an embodiment, the second processor 1702 includes the antenna 420, the receiver 418, the multi-antenna receiving processor472, the receiving processor470, the controller/processor475, and the memory 476 in FIG. 4 of the present application.

As an embodiment, the second processor 1702 includes the antenna 420, the receiver 418, the multi-antenna receiving processor472 and the receiving processor470 in FIG. 4 of the present application.

As an embodiment, the second processor 1702 includes the antenna 420, the receiver 418, and the receiving processor470 in FIG. 4 of the present application.

Those of ordinary skill in the art may understand that all or part of the steps in the above described methods can be accomplished by instructing relevant hardware through a program that can be stored in computer-readable storage media, such as read only memory, hard disk, or optical disk. Optionally, the steps of the above embodiments, in whole or in part, may also be implemented using one or more integrated circuits. Accordingly, the various module units in the above embodiments may be implemented in the form of hardware or in the form of software function modules. The present application is not limited to the combination of software and hardware of any particular form. The user equipment, terminals, and UEs in the present application include but are not limited to drones, communication modules on drones, remotely controlled aircrafts, aircrafts, small aircrafts, cell phones, tablets, notebooks, in-vehicle communications devices, wireless sensors, network cards, IoT terminals, RFID terminals, NB-IOT terminals, MTC (Machine Type Communication) terminals, eMTC (enhanced MTC) terminals, data cards, Internet cards, in-vehicle communications devices, low-cost mobile phones, low-cost tablet computers, and other wireless communication devices. The base stations or system devices in the present application include, but are not limited to, macrocellular base stations, microcellular base stations, home base stations, relay base stations, gNB NR node B, TRP (Transmitter Receiver Point), and other wireless communication devices.

The foregoing is merely a preferred embodiment of the present application and is not intended to limit the protective scope of the present application. Any modifications, equivalent substitutions, improvements, etc. made within the spirit and principles of the present application shall be included within the scope of protection of the present application.

**Claims**

1. A first node for wireless communication, wherein it comprises:

 a first receiver receiving a first DCI, the first DCI comprising a first domain;
 a first processor performing wireless reception on a first physical layer channel and wireless transmission on a second physical layer channel;
 wherein the first domain of the first DCI is used to determine the frequency domain res ource occupied by the first physical layer channel and the frequency domain resource occupied by the second physical layer channel.

2. The first node according to Claim 1, wherein the first DCI comprises a second domain and the second domain of the first DCI is used to determine the time domain resource occupied by the first physical layer channel and the time domain resource occupied by the second physical layer channel.

3. The first node according to Claim 1 or 2, wherein the first DCI comprises a first candidate domain and a second candidate domain; the first candidate domain indicates at least one of a MCS, NDI, RV or HARQ Process Number for the first physical layer channel; the second candidate domain indicates at least one of a MCS, NDI, RV or HARQ Process Number for the second physical layer channel.

4. The first node according to any one of Claims 1 to 3, wherein it comprises:
the first receiver, receiving a first message, the first message being used to determine a load size of the first domain of the first DCI.

5. The first node according to Claim 4, wherein the first message is used to determine a first frequency domain resource pool; at least one of the frequency domain resources occupied by the first physical layer channel or the frequency domain resources occupied by the second physical layer channel belongs to the first frequency domain resource pool.

6. The first node according to Claim 5, wherein it comprises:

    the first receiver receiving a second message for determining a second frequency domain resource pool;
    wherein the frequency domain resource occupied by the first physical layer channel belongs to the first frequency domain resource pool; the frequency domain resource occupied by the second physical layer channel belongs to the second frequency domain resource pool.

7. The first node according to Claim 5, wherein the first message is used to determine a first frequency domain resource subset, and the first frequency domain resource subset belongs to the first frequency domain resource pool; the frequency domain resource occupied by the first physical layer channel belongs to the first frequency domain resource pool, and the frequency domain resource occupied by the second physical layer channel belongs to the first frequency domain resource subset; or, the frequency domain resource occupied by the first physical layer channel belongs to the first frequency domain resource subset, and the frequency domain resource occupied by the second physical layer channel belongs to the first frequency domain resource pool.

8. A second node for wireless communication, wherein it comprises:

    a second transmitter, sending a first DCI, where the first DCI comprises the first domain;
    a second processor performing wireless transmission on a first physical layer channel and wireless reception on a second physical layer channel;

wherein the first domain of the first DCI is used to determine the frequency domain resource occupied by the first physical layer channel and the frequency domain resource occupied by the second physical layer channel.

9. A method used in a first node for wireless communication, wherein it comprises:

    receiving a first DCI, where the first DCI includes the first domain;
    performing wireless reception on a first physical layer channel and wireless transmission on a second physical layer channel;
    wherein the first domain of the first DCI is used to determine the frequency domain res ource occupied by th e first physical layer channel and the frequency domain resource occupied by the second physical layer channel.

10. A method used in a second node for wireless communication, wherein it comprises:

    receiving a first DCI, where the first DCI comprises the first domain;
    performing wireless transmission on a first physical layer channel and wireless reception on a second physical layer channel;
    wherein the first domain of the first DCI is used to determine the frequency domain resource occupied by the first physical layer channel and the frequency domain resource occupied by the second physical layer channel.

100

First node

receiving a first DCI, and the first DCI comprising a first domain;    101

Performing wireless reception on a first physical layer channel and wireless transmission on a second physical layer channel.    102

FIG. 1

5GS/EPS 200

220
HSS/UDM

RAN
202

201
UE

203
Node

211
MME/AMF/
SMF

214
Other
MME/AMF/SMF

230
Internet
services

241
UE

204
Other node

212
S-GW/UPF

213
P-GW/UPF

5GC/EPC
210

FIG. 2

Control plane
300

L3    RRC    306

L2    PDCP    304

305

RLC    303

MAC    302

L1    PHY    301

User plane
350

SDAP    356

355    L2    PDCP    354

RLC    353

MAC    352

L1    PHY    351

FIG. 3

FIG. 4

FIG. 5

U01. First node

N05 Fifth node

S6501. Sending a first message

First message

S6101. Receiving a first message

S6502. Sending second message

Second message

S6102. Receiving second message

F6.1 Optional

S6103. Receiving a first DCI

End

End

FIG. 6

First DCI → Including → Second domain

FIG. 7

Frequency
801(a)

Frequency
801(b)

FIG. (8a)

FIG. (8b)

FIG. 8

FIG. (9a)     FIG. (9b)

FIG. 9

FIG. (10a)     FIG. (10b)

FIG. 10

FIG. (11a)     FIG. (11b)

FIG. 11

FIG. 12

FIG. 13

FIG. 14

First DCI —— Including —→ First candidate domain and second candidate domain

FIG. 15

FIG. 16

FIG. 17

## INTERNATIONAL SEARCH REPORT

| International application No. |
| --- |
| **PCT/CN2023/110084** |

**A.    CLASSIFICATION OF SUBJECT MATTER**

H04L5/00(2006.01)i

According to International Patent Classification (IPC) or to both national classification and IPC

**B.    FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI: 下行控制信息, 下行控制信令, DCI, 信道, 频域, 分配, downlink control information, channel, frequency, distribution.

**C.    DOCUMENTS CONSIDERED TO BE RELEVANT**

| Category* | Citation of document, with indication, where appropriate, of the relevant passages | Relevant to claim No. |
| --- | --- | --- |
| X | CN 110351783 A (SPREADTRUM COMMUNICATIONS (SHANGHAI) CO., LTD.) 18 October 2019 (2019-10-18)<br>    description, paragraphs [0002]-[0081] | 1-10 |
| X | CN 106455095 A (CHINA ACADEMY OF TELECOMMUNICATIONS TECHNOLOGY) 22 February 2017 (2017-02-22)<br>    description, paragraphs [0033]-[0135] | 1-10 |
| A | CN 111836378 A (VIVO MOBILE COMMUNICATION CO., LTD.) 27 October 2020 (2020-10-27)<br>    entire document | 1-10 |
| A | KR 20200105406 A (ELECTRONICS AND TELECOMMUNICATIONS RESEARCH INSTITUTE) 07 September 2020 (2020-09-07)<br>    entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 October 2023** | **19 October 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/110084**

| Patent document cited in search report | | | Publication date (day/month/year) | Patent family member(s) | | | Publication date (day/month/year) |
|---|---|---|---|---|---|---|---|
| CN | 110351783 | A | 18 October 2019 | CN | 110351783 | B | 26 August 2022 |
| CN | 106455095 | A | 22 February 2017 | WO | 2017024998 | A1 | 16 February 2017 |
| | | | | CN | 106455095 | B | 17 September 2019 |
| CN | 111836378 | A | 27 October 2020 | WO | 2021027562 | A1 | 18 February 2021 |
| KR | 20200105406 | A | 07 September 2020 | US | 2020280971 | A1 | 03 September 2020 |
| | | | | US | 11425705 | B2 | 23 August 2022 |

Form PCT/ISA/210 (patent family annex) (July 2022)